(19) **Europäisches Patentamt / European Patent Office / Office européen des brevets**

(11) **EP 1 757 366 A2**

(12) **EUROPEAN PATENT APPLICATION**

(43) Date of publication:
28.02.2007 Bulletin 2007/09

(51) Int Cl.:
*B01J 37/34* (2006.01) *F01N 3/00* (2006.01)

(21) Application number: **06076667.2**

(22) Date of filing: **30.04.1999**

(84) Designated Contracting States:
**AT BE CH CY DE DK ES FI FR GB GR IE IT LI LU MC NL PT SE**

(30) Priority: **01.05.1998 US 71663**
**16.04.1999 US 293216**
**29.04.1999 US 301626**

(62) Document number(s) of the earlier application(s) in accordance with Art. 76 EPC:
**99948544.4 / 1 082 169**

(71) Applicant: **ENGELHARD CORPORATION**
**Iselin,**
**New Jersey 08830-0770 (US)**

(72) Inventors:
• **Galligan, Michael P.**
**Clark**
**NJ 07066 (US)**
• **Bond, Albert K.**
**Simpsonville**
**SC 29680 (US)**

• **Dettling, Joseph C.**
**Howell**
**NJ 07731 (US)**

(74) Representative: **Fisher, Adrian John et al**
**CARPMAELS & RANSFORD**
**43-45 Bloomsbury Square**
**London WC1A 2RA (GB)**

Remarks:
•Diese Anmeldung ist am 05092006 ls Teilanmeldung zu der unter INID-Kode 62 erwähnten Anmeldung eingereicht worden.
•This application was filed on 05 - 09 - 2006 as a divisional application to the application mentioned under INID code 62.
•This application was filed on 05 - 09 -2006X as a divisional application to the application mentioned under INID code 62.
•This application was filed on 05 - 09 - 2006 as a divisional application to the application mentioned under INID code 62.
•This application was filed on 05 - 09 - 2006 as a divisional application to the application mentioned under INID code 62.

(54) **Catalyst member having electric arc sprayed substrates and methods of making the same**

(57) Electric arc spraying a metal onto a substrate produces an anchor layer on the substrate that serves as a surprisingly superior intermediate layer for a catalytic material deposited thereon. Spalling of catalytic material is resisted even when subjected to the harsh conditions imposed by small engines or in a close-coupled position for a larger engine.

FIG.2A

EP 1 757 366 A2

## Description

CROSS-REFERENCE TO RELATED APPLICATIONS

This application is a continuation-in-part of co-pending U.S. patent application Serial No. 09/071,663 in the name of Michael P. Galligan et al, filed May 1, 1998, and entitled "CATALYST MEMBERS HAVING ELECTRIC ARC SPRAYED SUBSTRATES AND METHOD OF MAKING THE SAME", which is incorporated herein by reference, and is a continuation-in-part of co-pending U.S. patent application Serial No. 09/293,216 in the name of Michael P. Galligan et al, filed April 16, 1999, and entitled "CATALYST MEMBERS HAVING ELECTRIC ARC SPRAYED SUBSTRATES AND METHODS OF MAKING THE SAME", which is incorporated herein by reference and which is a continuation-in-part of said U.S. patent application Serial No. 09/071,663.

BACKGROUND OF THE INVENTION

Field of the Invention

The present invention relates to catalyzed substrates, that is, to catalyst members comprising a substrate on which is coated a catalytic material, and to methods of making such catalyzed substrates. More particularly, the present invention relates to catalyzed substrates comprising a substrate which is coated with a metal anchor layer in order to enhance the adherence of a catalytic material to the substrate or to facilitate mounting the catalyst member in a canister.

Related Art

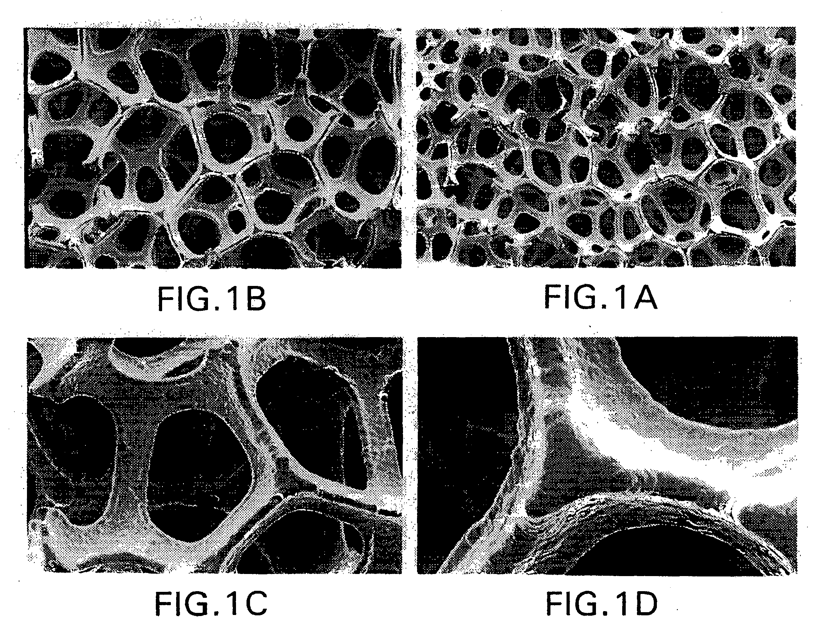

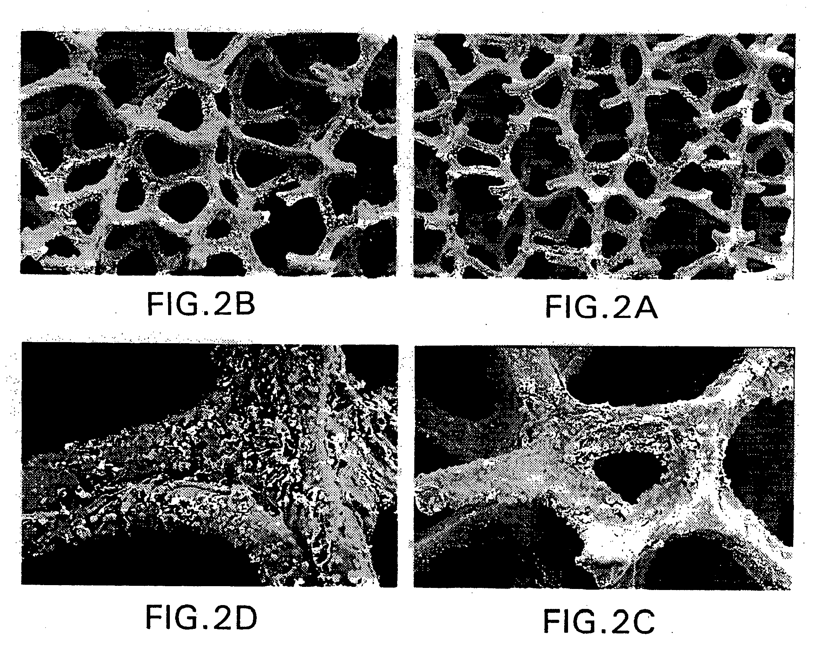

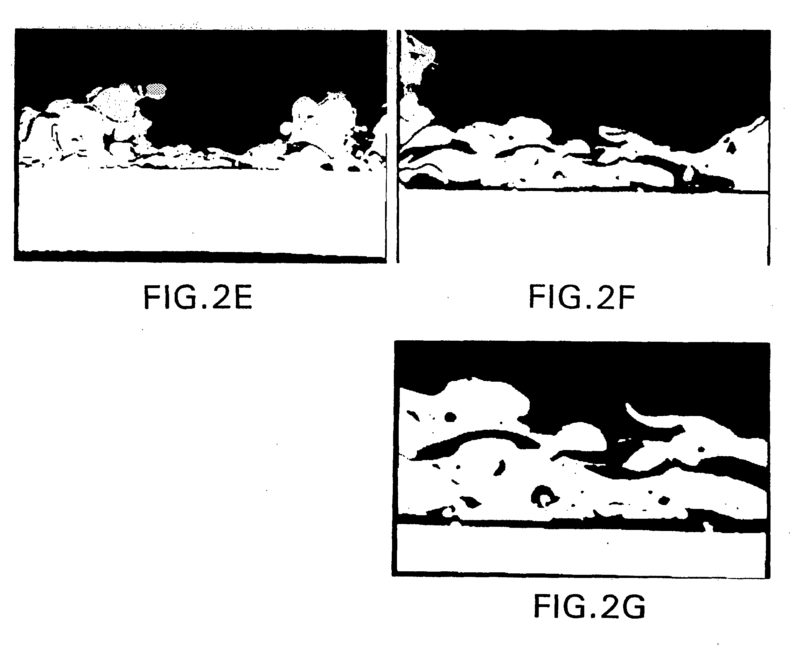

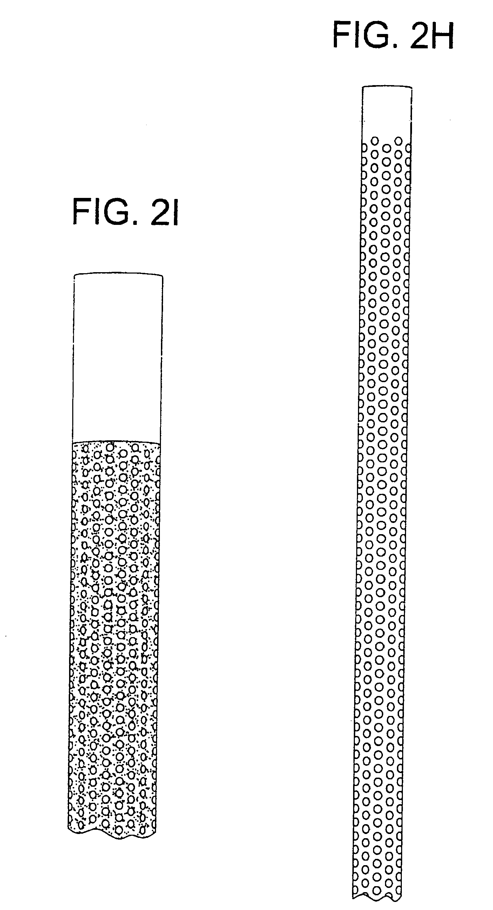

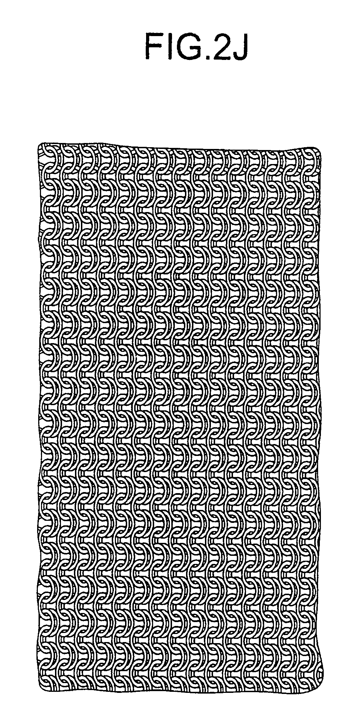

U.S. Patent 5,204,302, issued April 20, 1993 to I.V. Gorynin et al, is entitled "Catalyst Composition and a Method For Its Preparation" and is hereinbelow referred to as "the '302 Patent". The '302 Patent discloses a multi-layered catalyst material supported on a metal substrate. The metal substrate (column 4, lines 64-68) may be any thermally stable metal including stainless steel and low alloy steel, the '302 Patent stating that, regardless of which type of substrate is used, there is no appreciable difference in the performance of the bonded layers. As illustrated in Figure 1 of the Patent and described at column 4, line 32 et seq, a flame spraying or plasma spraying apparatus (Figure 2 and column 5, line 32 et seq) is used to apply an adhesive sublayer 12 to metal substrate 11, which is shown in solid cross section as a dense (solid) plate-like structure. Adhesive sublayer 12 contains a self-bonding intermetallic compound formed from any one of a number of metal pairings, including aluminum and nickel, as described at column 5, lines 1-6 of the '302 Patent. The high temperature of the flame or plasma spray operation is said to generate a diffusion layer (13 in Figure 1) caused by diffusion of material of substrate 11 and sublayer 12 across their interface (column 4, lines 37-41).

A catalytically active layer 14 (Figure 1) is sprayed atop the sublayer 12 and has a gradient composition with an increasing content of catalytically active material as one proceeds away from the interface (column 5, lines 7-24). The catalytically active layer can be alumina, preferably gamma-alumina, and may further include specified metal oxide stabilizers such as CaO, $Cr_2O_3$, etc., and metal oxide catalytic materials such as $ZrO_2$, $Ce_2O_3$, etc. A porous layer 18 (Figure 1 and column 5, lines 25-32) contains some catalytically active components and transition metal oxides as decomposition products of pore forming compounds such as $MnCO_3$, $Na_2CO_3$, etc., which presumably form pores as gases evolve from the carbonates or hydroxides (column 7, lines 40-45) as they thermally decompose (see column 7, lines 37-45). As described at column 5, line 44 et seq and at column 7, line 37 et seq, sublayer 12, catalytically active layer 14 and porous layer 18 may be applied by a continuous plasma spray operation in which different ones of the powders 21, 28 and 33 (Figure 2) are fed into the plasma spray in a preselected sequence and at preselected intervals. An optional activator coating 19 may be applied onto the porous layer, preferably by magnetron sputtering (see column 4, lines 56-63 and column 8, lines 24 et seq).

U.S. Patent 4,027,367, issued June 7, 1977 to H.S. Rondeau, which is incorporated herein by reference, is entitled "Spray Bonding of Nickel Aluminum and Nickel Titanium Alloys" and is hereinbelow referred to as "the '367 Patent". The '367 Patent discloses a method of electric arc spraying of self-bonding materials, specifically, nickel aluminum alloys or nickel titanium alloys, by feeding metal constituent wires into an electric arc spray gun (column 1, lines 6-13). The '367 Patent mentions, starting at column 1, line 25, combustion flame spray guns, e.g., guns feeding a mixture of oxygen and acetylene to melt a powder fed into the flame. Such combustion flame spray guns are said to operate at relatively low temperature and are often incapable of spraying materials having melting points exceeding 5,000°F (2,760°C). The '367 Patent also mentions (starting at column 1, line 32) that plasma arc spray guns are the most expensive type of thermal spray devices and produce much higher temperatures than combustion-type flame spray guns, up to approximately 30,000°F (16,649°C). It is further pointed out in the '367 Patent that plasma arc spray guns require a source of inert gas for the creation of plasma as well as extremely accurate control of gas flow rate and electric power for proper operation. In contrast, starting at column 1, line 39, electric arc spray guns are stated to simply require a source of electric power and a supply of compressed air or other gas to atomize and propel the melted material in the arc to the substrate or target. The use of electric arc spraying with a wire feed of nickel aluminum or nickel titanium alloys onto suitable substrates, including smooth steel and aluminum substrates is exemplified starting at column 5, line 28, but no mention is made of open, porous or honeycomb-type substrates, or ceramic substrates and there is no suggestion for the use of the resulting articles as carriers for catalytic materials.

U.S. Patent 3,111,396 to Ball, dated November 19, 1963 (hereinafter referred to as "the '396 Patent"), discloses a method for making a porous metal material or "metal foam". Essentially, the method comprises forming a porous organic structure such as a mesh, cloth, or a cured foam structure such as an open pore sponge, impregnating the structure with a fluid suspension of powdered metal in a liquid vehicle, and drying and heating the impregnated structure to remove the liquid vehicle and then further heating the organic structure to decompose it and to sinter the metal powder into a continuous form. The resulting metallic structure, while not foamed during the manufacturing process, is nevertheless described as foamed because its ultimate structure resembles that of a foamed material.

SAE (Society of Automotive Engineers) Technical Paper 971032, entitled *A New Catalyst Support Structure For Automotive Catalytic Converters* by Arun D. Jatkar, was presented at the International Congress and Exposition, Detroit, Michigan, February 24-27, 1997. This Paper discloses the use of metal foams as a substrate for automotive catalysts. The Paper describes the use of various metal foams as catalyst substrates and notes that foams made of pure nickel or nickel-chromium alloys were not successful as substrates for automotive catalysts because of corrosion problems encountered in the environment of an automotive exhaust catalyst. Metal foams made from FeCrAlloy and ALFA-IV® ferritic stainless steel powders were said to be successful, at least in preliminary tests, for use as substrates for automotive catalysts. A ceramic washcoat having a precious metal loading was deposited onto disks of ALFA-IV® metal foam produced by Astro Met, Inc. The washcoat comprised gamma-alumina and cerium oxide on which platinum and rhodium in a ratio of 4:1 were dispersed to provide a loading of 40 grams of the precious metal per cubic foot of the foam-supported catalyst. Such catalyzed substrates were said to be effective in treating hydrocarbon emissions.

In an article entitled "Catalysts Based On Foam Metals", published in Journal of Advanced Materials, 1994, 1(5) 471-476, Pestryakov et al suggest the use of foamed metal as a carrier substrate for catalytic materials for the catalytic neutralization of exhaust gases of car engines. The use of an intermediate layer of high surface area alumina between the metallic foam and the catalytic material is recommended, by direct deposition on the foam carrier. In addition to increasing the surface area of the substrate, the alumina is also credited with protecting the surface of the substrate against corrosion.

SAE Paper 962473 by Reck et al of EMITECH, GmbH, entitled "Metallic Substrates and Hot tubes For Catalytic Converters in Passenger Cars, Two- and Three-Wheelers", addresses the use of catalytic converters and hot tubes to treat the exhaust of scooters and motorcycles, especially those having two-stroke engines.

A supplier of wire mesh carriers for catalytic materials known as OptiCat offers for sale wire mesh comprising wire that has been plasma spray coated to form a rough surface thereon to improve the adherence of a catalytic material deposited thereon.

Prior art attempts to adhere catalytic materials to metallic substrates include the use of ferrous alloys containing aluminum. The alloy is formed into a substrate structure and is heat-treated under oxidizing conditions. The aluminum oxidizes, forming whiskers of alumina that project from the substrate surface and are believed to provide anchors for catalytic materials. The use of other alloying elements, e.g., hafnium, in ferrous metals for this purpose is known to provide such whiskers upon oxidizing treatment.

SUMMARY OF THE INVENTION

The present invention relates to the use of electric arc spraying of metal onto various substrates for use in preparing catalyst members.

One aspect of the present invention relates to a catalyst member comprising a carrier substrate having an anchor layer disposed thereon by electric arc spraying and catalytic material disposed on the carrier substrate.

According to one aspect of the invention, the anchor layer may be deposited by electric arc spraying a metal feedstock selected from the group consisting of nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, 300 series stainless steels, 400 series stainless steels, and mixtures of two or more thereof. In one embodiment, the anchor layer may comprise nickel and aluminum. The aluminum may comprise from about 3 to 10 percent, optionally from about 4 to 6 percent, of the combined weight of nickel and aluminum in the anchor layer.

According to another aspect of the invention, the catalytic material may be deposited on the anchor layer. It may comprise a refractory metal oxide support on which one or more catalytic metal components are dispersed.

Optionally, the substrate may comprise at least two regions of different density which may have different effective loadings of catalytic material thereon. The two regions may comprise foamed metal, wire mesh and/or corrugated foil honeycomb substrates.

An exhaust treatment apparatus may comprise a catalyst member as described herein connected in the exhaust flow path of an internal combustion engine. In one type of embodiment, the substrate of the catalyst member may comprise the interior surface of a conduit through which the exhaust of an internal combustion engine is flowed prior to discharge of the exhaust.

Another broad aspect of this invention relates to a catalyst member comprising a carrier comprising an open substrate selected from the group consisting of foamed metal substrates and honeycomb monolith substrates and having an anchor layer disposed thereon by thermal spraying, and catalytic material disposed on the carrier. In a particular embodiment, the substrate may comprise a foamed metal having from about 3 to 80 pores per lineal inch (ppi). Alternatively, the foamed metal substrate may have from 3 to 30 ppi or from 3 to 10 ppi, or, alternatively, from 10 to 80 ppi. Optionally, a foamed metal substrate may have a density of about 6 percent of the density of the metal from which it is formed.

The carrier substrate in a catalyst member according to the present invention may comprise a metal substrate or ceramic substrate or a combination of the two.

This invention also provides a method for manufacturing a catalyst member. The method comprises depositing by electric arc spraying a metal feedstock onto a substrate to provide a metal anchor layer on the substrate, and depositing a catalytic material onto the substrate. Optionally, the catalytic material may be deposited by means other than electric arc spraying. Depositing the catalytic material may comprise coating the metal anchor layer with a catalytic material comprising a refractory metal oxide support on which one or more catalytic components are dispersed. Optionally, the method may comprise electric arc spraying a molten metal feedstock at a temperature that permits the molten metal to freeze into an irregular surface configuration upon impinging on the substrate surface, for example, electric arc spraying the molten metal at an arc temperature of not more than about 10,000°F.

Another method provided by this invention relates to a method for manufacturing a catalyst member comprising electric arc spraying a metal feedstock onto at least one substrate to provide at least one anchor layer-coated substrate, depositing onto the at least one anchor layer-coated substrate a catalytic material comprised of a bulk refractory metal oxide having dispersed thereon one or more catalytically active components to provide at least one catalyzed substrate and incorporating the at least one catalyzed substrate into a body configured to define an inlet opening and an outlet opening and so configuring and disposing the at least one catalyzed substrate between the inlet and outlet openings to define a plurality of fluid flow paths therebetween.

This invention may therefore provide an exhaust treatment apparatus comprising a catalyzed substrate comprising a metal substrate defining a plurality of fluid flow passages therethrough and having thereon an anchor layer electric arc sprayed thereon. There may be a catalytic material disposed on the anchor layer, the catalytic material comprising a bulk refractory metal oxide having dispersed thereon one or more catalytically active metal components. The catalyzed substrate may be enclosed in a canister having an inlet opening and an outlet opening and disposed between the inlet and outlet openings, whereby at least some of a fluid flowing through the canister between the inlet and outlet openings thereof is constrained to follow the fluid flow paths and thereby contact the catalyzed metal substrate. The catalyzed metal substrate may be configured and positioned within the canister whereby substantially all of a fluid flowing through the canister between the inlet and outlet openings thereof is constrained to follow the fluid flow paths and thereby contact the catalyzed metal substrate.

The invention also provides a method for treating an engine exhaust stream by flowing the exhaust stream in contact with a catalyst member as described herein.

The present invention also provides a method for manufacturing a catalyst member to conform to a mounting container, the method comprising depositing an anchor layer onto a pliable substrate to provide an anchor layer coated substrate, depositing a catalytic material onto the substrate and reshaping the substrate to conform to the container after depositing at least the anchor layer thereon. Depositing the anchor layer may comprise thermally spraying a metal feedstock onto the substrate, e.g., by electric arc spraying and/or plasma spraying. The method may optionally comprise reshaping the substrate after depositing the catalytic material thereon. Conforming the substrate to the container may comprise inserting the substrate in the container.

This invention can provide an improvement to a variety of devices that are powered by small engines and diesel engines that have exhaust treatment apparatuses, the improvement being that the exhaust treatment apparatus comprises a catalyst member as described herein. Such inventions include, but are not limited to, motorcycles, lawn mowers, gas-powered generators, debris blowers and the like.

BRIEF DESCRIPTION OF THE DRAWINGS

Figures 1A-1D are photomicrographs of a foamed metal substrate without an anchor layer deposited thereon, at magnifications of 38x, 55x, 152x and 436x, respectively;

Figures 2A-2D are photomicrographs of a foamed metal substrate having an anchor layer electric arc sprayed thereon, at magnifications of 38x, 55x, 153x and 434x, respectively;

Figures 2E-2G are photomicrographs of a cross section of a flat metal substrate and an anchor layer electric arc sprayed thereon, at magnifications of 500x, 1.51kx and 2.98kx.

Figure 2H is an elevation view of a perforated, tubular metal substrate;

Figure 2I is an elevation view of a catalyst member in accordance with the present invention comprising the substrate of Figure 2H;

Figure 2J is a schematic view of a wire mesh substrate having an anchor layer sprayed thereon in accordance with the present invention;

Figure 3A is a schematic cross-sectional view of a metal substrate having an anchor layer electric arc sprayed thereon according to one embodiment of the present invention;

Figure 3B is a schematic cross-sectional view of the substrate of Figure 3A after processing into a corrugated configuration and being disposed upon another sprayed substrate;

Figure 3C is a schematic cross-sectional view of the substrates of Figure 1B after further processing to wind the substrates to form a honeycomb;

Figure 3D is a schematic process diagram illustrating the manufacture of a catalyst member according to a particular embodiment of the present invention;

Figure 3E is a plan view illustrating a fragment of a skewed corrugated strip used in the invention;

Figure 3F is an enlarged fragmentary side profile of the corrugated strip shown in Figure 3E;

Figure 3G is a perspective view illustrating a honeycomb carrier core body formed by folding the strip shown in Figure 3E;

Figure 3H is an exploded perspective view depicting the assembly of the core body with a jacket tube;

Figure 3I is an enlarged fragmentary end view of the core body shown in Figure 3G;

Figure 3J is an enlarged fragmentary end view, similar to Figure 3I, but illustrating the core body and jacket after assembly;

Figure 3K is a fragmentary cross section illustrating a preferred way of inserting the core body of the invention into a jacket tube;

Figure 3L is a cross section illustrating a swaging operation of the assembled core body and jacket tube after assembly;

Figure 3M is a plan view illustrating an alternative manner of assembling the core body and jacket tube;

Figure 3N is a plan view illustrating the core body and jacket tube of Figure 3M after assembly is completed;

Figure 3P is a plan view illustrating the honeycomb carrier body product of the invention;

Figure 3Q is a side elevation of the carrier body illustrated in Figure 11;

Figures 3R, 3S, 3T and 3U are plan views showing alternative configurations of core bodies that may be formed by and used in the present invention;

Figure 4A is a schematic cross-sectional view of a muffler for a small engine containing an exhaust gas treatment apparatus that comprises a catalyst member according to one embodiment of the present invention;

Figure 4B is a view of portion A of the apparatus of Figure 4A;

Figure 5 is a perspective view of a ceramic honeycomb substrate having an anchor layer deposited on the smooth outer surface thereof according to another embodiment of the invention;

Figure 6A is a schematic cross-sectional view of an exhaust gas treatment apparatus including two foamed metal regions of different densities according to the present invention;

Figure 6B is a schematic cross-sectional view of a coated foamed metal substrate mounted in a tapered sleeve in accordance with another embodiment of the present invention;

Figure 6C is a schematic elevation view of a mounting sleeve for a catalyst member in accordance with one embodiment of the present invention;

Figure 6D is a schematic cross-sectional view of the sleeve of Figure 6C taken along lines 6D-6D;

Figure 7A is a perspective view of a two-wheeled tractor powered by a small engine equipped with a catalyst member in accordance with the present invention;

Figure 7B is a schematic elevation view of a motorcycle comprising a catalyst member in accordance with the present invention; and

Figure 7C is a schematic perspective view of a gasoline-powered generator comprising a utility engine equipped with a catalyst member in accordance with the present invention.

DETAILED DESCRIPTION OF THE

INVENTION AND PREFERRED EMBODIMENTS THEREOF

This invention pertains to the preparation of a carrier for catalytic material by the thermal spraying of a metal anchor layer onto a substrate. Catalytic material may then be deposited on the carrier.

One broad aspect of this invention pertains to the utilization of thermal spraying to apply a metal anchor layer onto a substrate having an open structure, i.e., an "open substrate". An open substrate defines numerous apertures, pores, channels or similar structural features that cause liquid and/or gas to flow therethrough in turbulent or substantially non-laminar fashion and give the substrate a high surface area per overall volume of the flow path of the fluid through the substrate, e.g., features that create a high mass transfer zone for the fluid therein. In contrast, a dense substrate, such as a plate, tube, foil and the like, has a relatively small surface area per overall volume of the flow path through the substrate regardless of whether it is perforated or not, and do not substantially disrupt laminar flow therethrough. Open substrates may be provided in a variety of forms and configurations, including honeycomb-type monoliths, woven or non-woven mesh, wadded fibers, foamed or otherwise reticulated or lattice-like three-dimensional structure, etc. Since these structures have higher surface areas than dense substrates and since they permit fluid flow therethrough, they are well-suited for use in preparing catalyst members for the catalytic treatment of liquid- or gas-borne materials. This broad aspect of the present invention pertains to thermal spraying processes in general, including plasma spraying, single wire plasma spraying, high velocity oxy-fuel spraying, combustion wire and/or powder spraying, electric arc spraying, etc., which have not previously been utilized for open substrates. One reason that thermal spraying has not been used in open substrates is the belief that to obtain good results it is necessary that substantially all of the surface area of a substrate to be sprayed had to be accessible in a line of "sight" from the spray head and that open substrates have so much surface area that is not accessible in this way, i.e., that open substrates have such a high degree of surface area that is obscured relative to a line of sight from a spray head, that satisfactory spraying could not be achieved. The present invention reveals, however, that open substrates can in fact be satisfactorily coated using thermal spray methods.

Another aspect of the present invention arises from a discovery that electric arc spraying, e.g., twin wire arc spraying, of a metal (which term, as used herein and in the claims, includes mixtures of metals, including without limitation, metal alloys, pseudoalloys, and other intermetallic combinations) onto a metal or ceramic substrate yields a structure having unexpectedly superior utility as a carrier for catalytic materials in the field of catalyst members, regardless of whether the substrate is an open substrate or a dense substrate. Twin wire arc spraying (encompassed herein by the term "wire arc spraying" and by the broader term "electric arc spraying") is a known process, as indicated by the above reference to U.S. Patent 4,027,367 which is incorporated herein by reference. Briefly described, in the twin wire arc spray process, two feedstock wires act as two consumable electrodes. These wires are insulated from each other as they are fed to the spray nozzle of a spray gun in a fashion similar to wire flame guns. The wires meet in the center of a gas stream generated in the nozzle. An electric arc is initiated between the wires, and the current flowing through the wires causes their tips to melt. A compressed atomizing gas, usually air, is directed through the nozzle and across the arc zone, shearing off the molten droplets to form a spray that is propelled onto the substrate. Only metal wire feedstock can be used in an arc spray system because the feedstock must be conductive. The high particle temperatures created by the spray gun produce minute weld zones at the impact point on a metallic substrate. As a result, such electric arc spray coatings (sometimes referred to herein as "anchor layers") have good cohesive strength and a very good adhesive bond to the substrate.

The principal operating parameters in wire arc spraying include the voltage and amperage for the arc, the compression of the atomizing gas, the nozzle configuration and the stand-off from the substrate. The voltage is generally in the range of from 18 to 40 volts, and is typically in the range of from 28 to 32 volts; the current may be in the range of from about 100 to 400 amps. The atomizing gas may be compressed to a pressure in the range of from about 30 to 70 psi. The nozzle configuration (e.g., slot aperture or cross aperture) and spray pattern vary in accordance with the desired nature of the anchor layer or may be chosen to accommodate the other parameters or the character of the substrate. A suitable stand-off is generally in the range of from about 4 to 10 inches from the substrate to the nozzle. Another operating parameter is the spray rate for the feedstock, a typical example of which would be 100 pounds per hour per 100 amps (4.5 kg/hr/100 amps). Still another parameter is the coverage or feedstock consumption rate, which may be, to give a particular example, 0.9 ounce per square foot per .001 inch thickness of the anchor layer. (It is typical to have a deposition efficiency of 70 percent (e.g., for spraying a plate) or less.)

Electric arc spray coatings are usually harder to finish (e.g., to grind down) and normally have higher spray rates than coatings of other thermal spray processes. Dissimilar electrode wires can be used to create an anchor layer containing a mixture of two or more different metal materials, referred to as a "pseudoalloy". Optionally, reactive gases can be used to atomize the molten feedstock to effect changes in the composition or properties of the applied anchor layer. On the other hand, it may be advantageous to employ an inert gas or at least a gas that does not contain oxygen or another oxidizing species. Oxygen, for example, may cause oxidation on the surface of a metal substrate or in the feedstock material and thus weaken the bond between the anchor layer and the substrate.

Anchor layers of a variety of compositions can be deposited on a substrate in accordance with the present invention by utilizing, without limitation, feedstocks of the following metals and metal mixtures: Ni, Ni/Al, Ni/Cr, Ni/Cr/Al/Y, Co/Cr, Co/Cr/Al/Y, CoINUCrIA11Y, Fe/Al, Fe/Cr, Fe/Cr/Al, Fe/Cr/Al/Y, Fe/Ni/Al, Fe/Ni/Cr, 300 and 400 series stainless steels, and, optionally, mixtures of one or more thereof. One specific example of a metal useful for wire arc spraying onto a substrate in accordance with the present invention is a nickel/aluminum alloy that generally contains at least about 90% nickel and from about 3% to 10% aluminum, preferably from about 4% to 6% aluminum by weight. Such an alloy may contain minor proportions of other metals referred to herein as "impurities" totaling not more than about 2% of the alloy. A preferred specific feedstock alloy comprises about 95% nickel and 5% aluminum and may have a melting point of about 2642°F. Some such impurities may be included in the alloy for various purposes, e.g., as processing aids to facilitate the wire arc spraying process or the formation of the anchor layer, or to provide the anchor layer with favorable properties.

One aspect of the present invention derives from the discovery that electric arc spraying a metal onto a metal substrate yields an unexpectedly superior carrier for catalytic materials relative to carriers having metal anchor layers applied thereto by other methods. Catalytic materials have been seen to adhere better to a carrier comprising an electric arc sprayed anchor layers than to a carrier comprising a substrate without an intermediate layer applied thereto and even better than to a carrier comprising a substrate having a metal layer deposited thereon by plasma spraying. Before the present invention, catalytic materials disposed on metal substrates, with or without intermediate layers between the substrate and the catalytic material, often did not adhere sufficiently well to the substrate to provide a commercially acceptable product. For example, a metal substrate having a metal intermediate layer that was plasma-sprayed thereon and having a catalytic material applied to the intermediate layer failed to retain the catalytic material, which flaked off upon routine handling, apparently due to a failure of the intermediate layer to bond with the substrate. The catalytic material on other carriers was seen to spall off upon normal use, apparently as a result of being subjected to a high gas flow rate, to thermal cycling, to the eroding contact of high temperature steam and other components of the exhaust gas stream, vibrations, etc. The present invention therefore improves the durability of catalyst members comprising catalytic materials carried on carrier substrates by improving their durability. It also permits the use of such catalyst members in positions upstream from sensitive equipment like turbochargers that would be damaged by catalytic material and/or anchor layer material that spall off prior art catalyst members.

Surprisingly, the Applicants have discovered that electric arc spraying, of which wire arc spraying is a particular embodiment, of a metal onto a metal substrate results in a superior bond between the resulting anchor layer and the substrate relative to plasma spraying. An electric arc sprayed anchor layer is believed to have at least two characteristics that distinguish it from anchor layers applied by plasma spraying: a superior anchor layer-metallic substrate interface bond and a highly irregular or "rough" surface. It is believed that the anchor layer-metallic substrate interface bond may be the result of diffusion between the sprayed material and the metallic substrate that is achieved at their interface despite the relatively low temperature at which wire arc spraying is practiced. For example, the electric arc temperature may be not more than 10,000°F. In such case, the temperature of the molten feedstock is expected to be at a temperature of not more than about 5000°F, preferably in the range of 1000° to 4000° F, more preferably not more than about 2000°F. The low temperature is also believed to be responsible for the especially uneven surface of the anchor layer because the sprayed material cools on the substrate (whether metal or ceramic) to its freezing temperature so quickly that it does not flow significantly on the substrate surface and therefore does not smooth out. Instead, it freezes into an irregular surface configuration. Accordingly, the surface of the anchor layer has a rough profile that provides a superior physical anchor for catalytic components and materials disposed thereon. The rough profile appears to be the result of "pillaring", the formation of small, pillar-like structures resulting from the sequential deposition and freezing of one molten drop of feedstock material atop another.

An electric arc spray process can be used to produce an anchor layer on a variety of substrates that may vary by their composition and/or by their physical configuration. For example, the substrate may be an open substrate or a dense substrate; it may be in the form of a metal plate, tube, foil, wire, wire mesh, rigid or malleable foamed metal, etc., ceramic structures, or a combination of two or more thereof. It does not appear to be important to match the sprayed metal to the metal of the substrate.

As stated above, foamed metal may provide one species of open substrate for use in the present invention. Methods for making foamed metal are known in the art, as evidenced by U.S. Patent 3,111,396, discussed above, and the use of foamed metal as a carrier for a catalytic material has been suggested in the art, as recognized above by reference to SAE Technical Paper 971032 (cited above) and to the journal article by Pestryakov et al (cited above). Foamed metal can be characterized in various ways, some of which relate to the properties of the initial organic matrix about which the metal is disposed. Some characteristics of foamed metal substrates recognized in the art include cell size, density, free volume, and specific surface area. For example, the surface area may be 1500 times that of a solid substrate having the same dimensions as the foamed substrate. As mentioned by Pestryakov et al, foamed metal substrates useful as carriers for catalyst members may have mean cell diameters in the range of 0.5 to 5 mm, and they may have a free volume of from about 80 to 98%, e.g., 3 to 15 percent of the volume occupied by the foamed substrate may constitute metal. The porosity of the substrate may range from 3 to 80 ppi, e.g., from 3 to 30 ppi or from 3 to 10 ppi or, alternatively, from 10 to 80 ppi. For example, a metal foam having 5 ppi has been found to be useful as a support for a catalytic material in a catalyst member used with a motorcycle engine. In the illustrative range of 10 to 80 ppi, other characteristics such as cells per square inch may range from 100 to 6400 and the approximate web diameter may vary from 0.01 inch to 0.004 inch. Such foams may have open-cell reticulated structures, based on a reticulated/interconnected web precursor. They typically have surface areas that increase with porosity in the range of from about 700 square meters per cubic foot of foam ($m^2/ft^3$) at about 10 ppi to 4000 $m^2/ft^3$ at about 60 ppi, etc. Other suitable foamed metal substrates have surface areas ranging from about 200 square feet per cubic foot of foamed metal ($ft^2/ft^3$) at about 10 ppi to about 1900 $ft^2/ft^3$ at about 80 ppi. One such substrate has a specific weight of 500 $g/m^2$ at a thickness of about 1.6 +/- 0.2 millimeters with a porosity of 110 ppi. They may have volume densities in the range of 0.1 to 0.3 grams per cubic centimeter (g/cc). Foamed metal sheets can be rolled, layered, etc., to build up a substrate of any desired dimension.

Suitable foamed nickel with which the present invention may be practiced is commercially available in extruded sheets about 1.6 millimeters (mm) thick. It may have tensile strengths of at least 3 kilograms per square centimeter ($kg/cm^2$) in the machine direction and 9 percent in the transverse direction. At thicknesses of 1.3 to 2.5 mm, it may have specific weights in the range of 350 to 1000 $g/m^2$ and a pore size of 60 to 110 pores per lineal inch (ppi). One particular material has a specific weight of 500 $g/m^2$ and 80 ppi.

One suitable foamed metal substrate for use with the present invention had a density of about 6 percent. Foamed metal substrates can be formed from a variety of metals, including iron, titanium, tantalum, tungsten noble metals, common sinterable metals such as copper, nickel, bronze, etc., aluminum, zirconium, etc., and combinations and alloys thereof such a steel, stainless steel, Hastalloy, Ni/Cr, Inconel (nickel/chromium/iron) and Monel (nickel/copper).

Stainless steel foam is a good, low-cost alternative to plate-like substrates and to more expensive alloy foams such as FeCrAlloy (FeCrAl).

Pestryakov et al state that the specific surface area for pure foam metals equals approximately 0.01 to 0.1 $m^2/g$, but that this is insufficient to produce active catalysts for a majority of catalytic processes taking place in the kinetic region. They therefore recommend increasing the specific surface area by direct deposition on the foamed metal of gamma-alumina having a surface area of 20 to 50 $m^2/g$, although they state that low surface area foamed metals may be used in high temperature external diffusion processes. The present invention teaches instead the thermal spraying such as electric arc spraying of a metal anchor layer preferably comprising nickel aluminide onto the metal foam substrate.

To illustrate the dramatic difference in the surface of an anchor layer applied in accordance with the present invention as compared to the surface of a metal substrate without the anchor layer, reference is made herein to Figures 1A through 1D and, for comparison thereto, Figures 2A through 2D. Figures 1A through 1D are photomicrographs of a foamed metal substrate, taken at a variety of magnification levels. These Figures show that the substrate has a three-dimensional web-like structure having smooth surfaces. By comparison, Figures 2A through 2D are photomicrographs of a foamed metal substrate taken at corresponding magnification levels after an anchor layer has been electric arc sprayed thereon. A visual comparison of Figures 1A through 1D and the corresponding Figures 2A through 2D illustrates the roughened surface that results from electric arc spraying an anchor layer onto a substrate as taught herein. Figures 2E, 2F and 2G show sections of a high temperature steel plate substrate 100 and a nickel aluminide anchor layer 110 electric arc sprayed thereon, at magnifications of 500x, 1.51kx and 2.98kx, respectively. As is evident from these Figures, the anchor layer 110 provides a highly irregular surface on the substrate 100. Accordingly, the anchor layer 110 effectively increases the surface area on which catalytic material may be deposited on the carrier relative to a non-sprayed substrate and it provides structural features such as crevices, nooks, etc., that help prevent spalling of catalytic material from the anchor layer. Figures 2E through 2G illustrate that the relatively low temperature of the electric arc spray process deposits the metal feedstock for the anchor layer on the substrate at a temperature that permits the feedstock to freeze when it impinges upon the substrate rather than remaining molten and flowing into a smoother configuration.

Another species of open substrate may be provided by woven or non-woven wire mesh. A woven wire mesh substrate for use with the present invention may be formed in any suitable weave, e.g., plain, twill, plain Dutch weave, twill Dutch weave, crocheting, etc. Wire mesh is commonly available in weaves that leave from about 18 to 78 percent open area, more typically, from about 30 to 70 percent open area. "Open area" is known in the art as a measure of total mesh area that is open space. Mesh counts (the number of openings in a lineal inch) for such materials vary from two per inch by two per inch (2x2) to 635x635. The mesh may be woven from wires comprising aluminum, brass, bronze, copper, nickel, stainless steel, titanium, etc., and combinations and alloys thereof. A non-woven wire mesh that can be used as an open substrate in accordance with this invention may be made from the same materials as woven mesh. A wire mesh substrate may comprise one or more layers of wire mesh joined together by soldering, welding or any other suitable method.

In another example of the practice of the present invention, a perforated stainless steel tube substrate as shown in Figure 2H was electric arc sprayed with a nickel aluminide feedstock to deposit an anchor layer thereon; a catalytic material can then be deposited on the anchor layer. A sample of a resulting catalyst member is shown in Figure 2I. The anchor layer will provide superior adhesion of a catalytic material to the carrier when it is used to prepare a catalyst member in accordance with the present invention. A catalyst member so configured is suitable for use in an exhaust treatment apparatus to serve, for example, as a substitute for commercially available tubular catalyst members that may be installed in the exhaust stream, e.g., inside a section of the exhaust piping. The tubular catalyst member may optionally be installed at a point upstream from a conventional catalytic converter. In an alternative embodiment, the interior of a non-perforated tubular substrate may be wire arc sprayed and coated with catalytic material. The resulting interiorly-coated tubular catalyst member can be used in place of a conventional, non-catalyzed tubular portion of the prior art exhaust gas treatment apparatus of an engine, e.g., as a length of exhaust pipe. Optionally, a flow-through catalyst member may be mounted within the tubular catalyst member.

The strong bond of an anchor layer achieved by electric arc spraying permits the resulting substrates to be mechanically processed in various ways that reshape the substrate but that do not diminish the mass of the substrate, i.e., they do not involve cutting, grinding or other removal of substrate material. For example, pliable (i.e., malleable and/or flexible) anchor layer-coated substrates may be bent, compressed, folded, rolled, woven, etc., after the anchor layer is deposited thereon, in addition to or instead of being cut, ground, etc. As used herein and in the claims, the term "reshape" is meant to encompass all such processes that deform the substrate but do not reduce its mass by cutting, grinding, etc. Thus, a wire arc-sprayed foil substrate can be reshaped by being corrugated and rolled with a flat foil to provide a corrugated foil honeycomb. A wire can be reshaped by being sprayed and then woven with other wires to compose a mesh that is used as a carrier for a catalytic material. Similarly, a flat wire mesh substrate that has been wire arc sprayed in accordance with this invention can then be reshaped by being curled into a cylindrical configuration or by being formed into a corrugated sheet that may optionally be combined with other substrates to compose a carrier, or that may be used on its own. A plural-layer wire mesh substrate with an anchor layer thereon that can optionally be reshaped in these ways is shown in Figure 2J. Likewise, foamed metal having an anchor layer thereon may be reshaped by being compressed to change its shape and/or density as discussed herein. Such reshaping may occur before or even after catalytic material is deposited on the foamed metal substrate. The present invention permits the manufacture of carriers and/or catalyst members that can easily be molded to fit within a portion of an exhaust gas treatment apparatus that serves as a container for the catalyst member, e.g., in a canister specifically designed to house a catalyst member, or in another portion of the apparatus, e.g., an exhaust manifold, exhaust flow pipe, a high mass transfer area conduit, etc. For example, a flat, catalyzed wire mesh patch prepared in accordance with the spraying and coating methods described herein may be reshaped for installation in an exhaust pipe by being rolled into a coiled configuration. Optionally, the substrate may be resilient and may, upon insertion into a containing structure, be allowed to unwind or otherwise relax from the reshaping force to the extent that it bears against the interior surface of the containing structure, thus conforming to the structure.

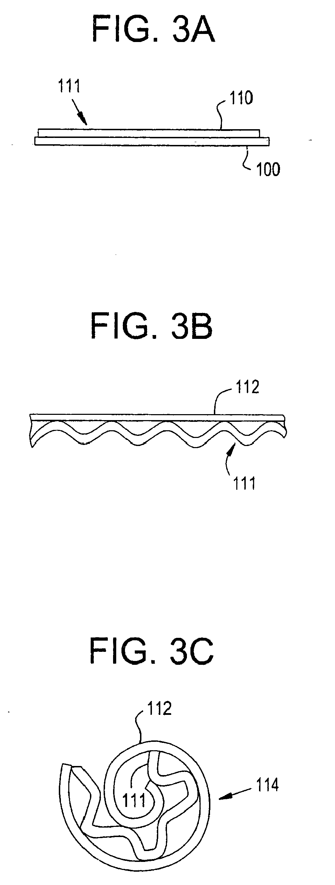

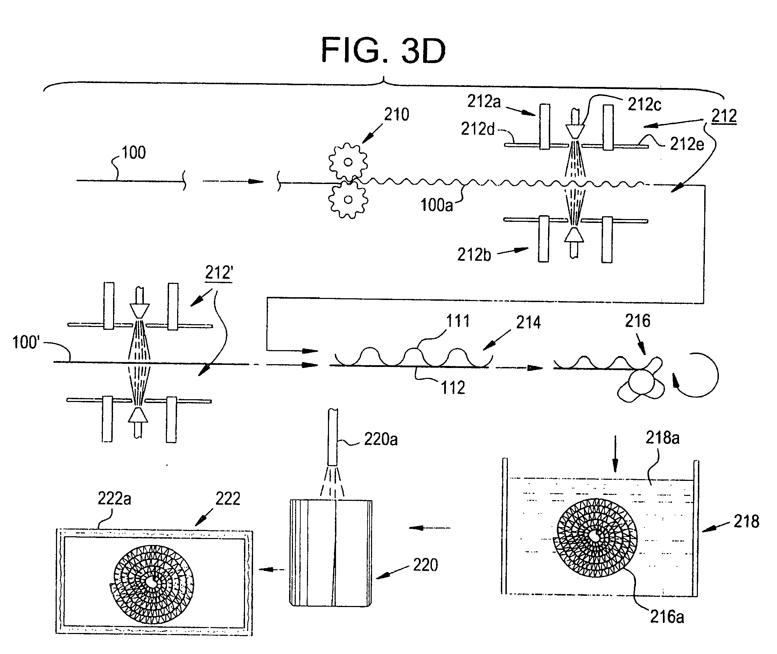

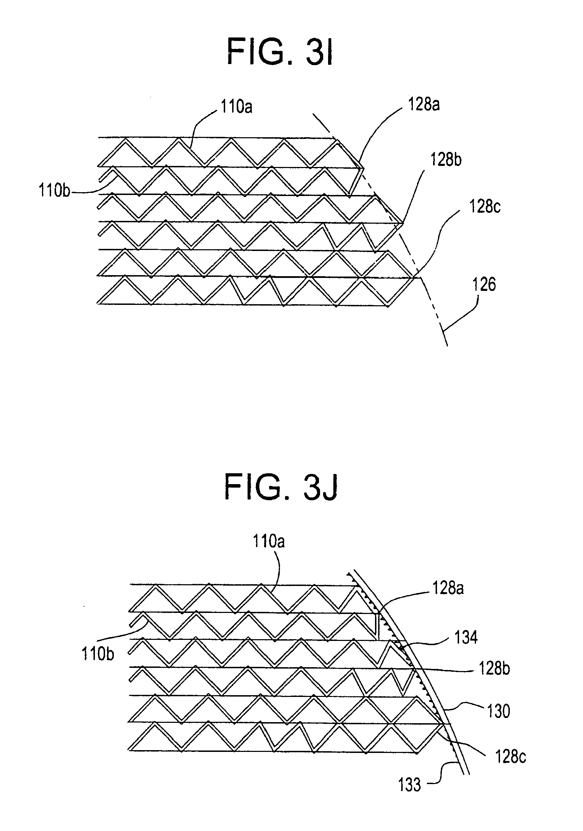

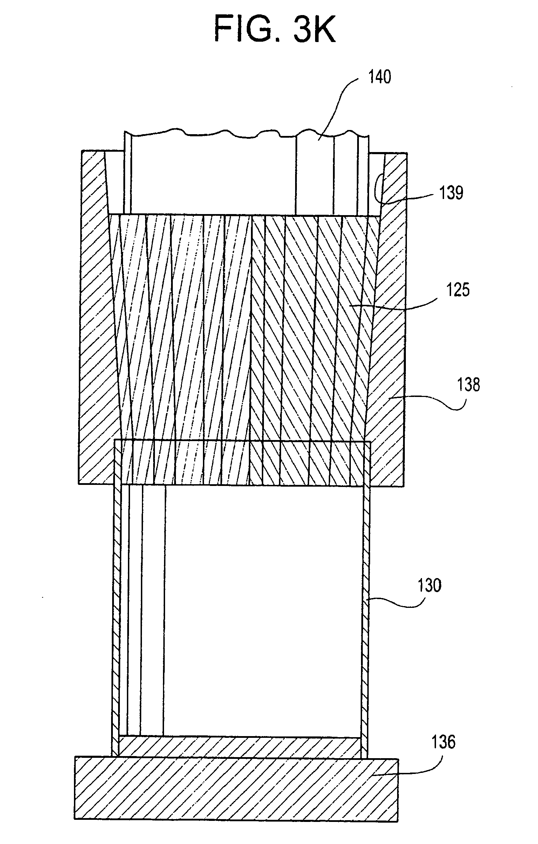

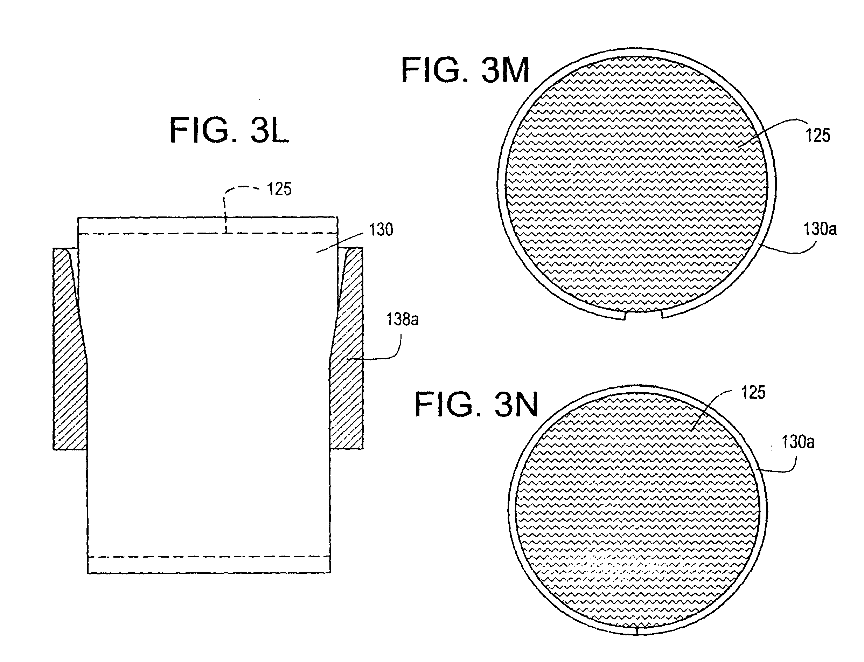

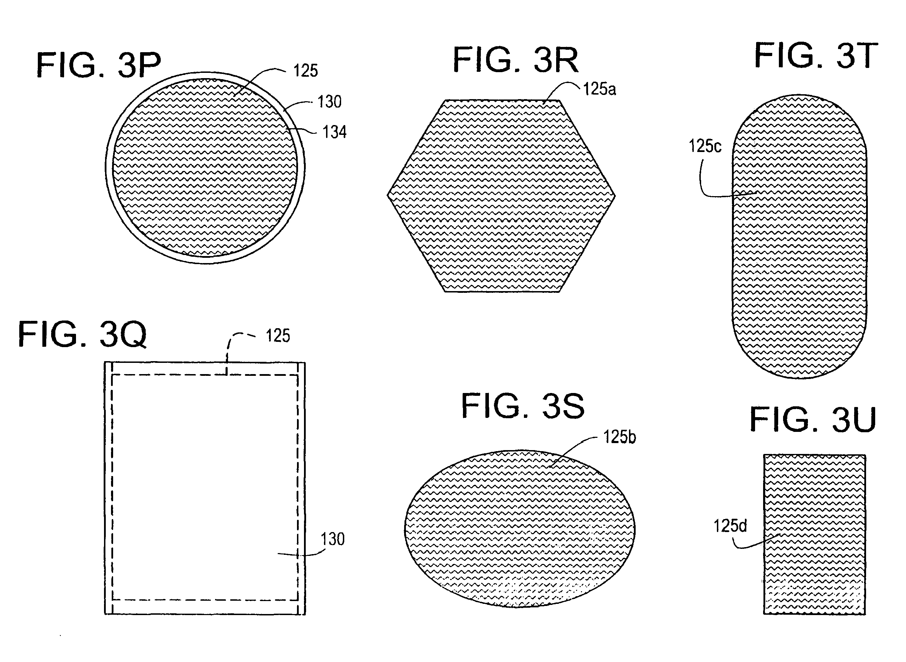

One example of a substrate that has been reshaped after having an anchor layer deposited thereon is seen in Figure 3A, which shows a metal substrate 100 that has been wire arc sprayed to deposit an anchor layer 110 thereon. The sprayed substrate 111 may then be corrugated and placed against a second, optionally sprayed substrate 112, as shown in Figure 3B. The two substrates may be further processed by coiling them together as shown Figure 3C to compose a carrier 114 for catalytic material to be deposited thereon. A process for producing a catalyst member from such a carrier is shown in schematically in Figure 3D, beginning with a flat metal foil substrate 100 which is passed through a corrugation station 210 to produce a corrugated foil substrate 100a.

The corrugated substrate 100a is passed through an electric arc spraying station 212 comprising two electric arc spraying apparatuses 212a, 212b, one for spraying each side of substrate 100a. Each apparatus comprises a pair of electrified feedstock wires 212d and 212e which may comprise a nickel aluminide alloy or other metal, and a spray gun 212c for atomizing the molten metal formed by the electric charge passing between the electrode wires. The spray gun sprays the molten metal feedstock onto the substrate. Separately, a flat substrate 100' has an anchor layer electric arc sprayed on both sides thereof in station 212'. The corrugated, electric arc sprayed substrate 111 is disposed upon the flat electric arc sprayed substrate 112 in step 214, and the two substrates are wound (reshaped) and then secured together in step 216 to produce a metallic honeycomb carrier in a manner generally known in the art. At coating station 218, the carrier 216a is dipped in a bath 218a comprising a slurry of catalytic material. In step 220, an air knife 220a is used to blow excess catalytic material from the carrier. In a fixing step 222, the coated carrier is placed in an oven 222a where it is dried and optionally calcined to remove the liquid portion of the slurry and to bind the catalytic material onto the carrier, thus producing a catalyst member comprising catalytic material deposited upon an electric arc sprayed carrier substrate. The catalyst member may be incorporated into an exhaust gas treatment apparatus by being mounted in a body or canister for placement in the exhaust gas stream of an engine.

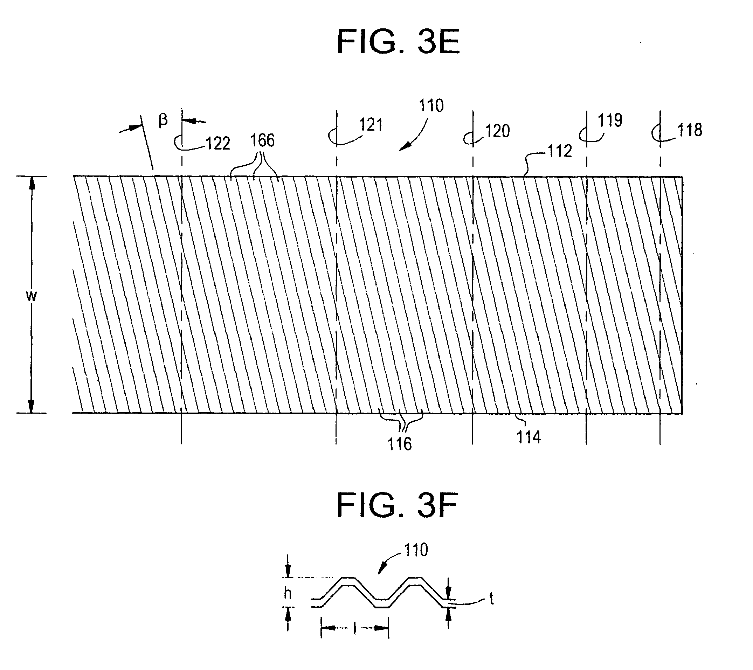

Preferred metallic honeycomb carriers may be made according to a method that makes use of a corrugated foil strip having opposite side edges and corrugations oriented at an oblique angle to the side edges. The foil strip is folded on lines perpendicular to the side edges to provide a core body having fluid passages between opposite ends and a shaped periphery defmed by parallel outside folds in the corrugated strip. The core body thus formed is inserted into a jacket tube so that folds at the core body periphery are in compressive contact with the jacket tube, and the periphery of the core body is joined to the jacket tube. The method for producing such carriers and the carrier resulting therefrom are described in detail in U.S. patent application Serial No. 081728,641 filed October 10, 1996, the disclosure of which is incorporated herein by reference. Briefly restated, a preferred honeycomb carrier core body may be formed from a corrugated foil strip in which corrugations are oriented at an oblique angle to side edges of the strip. An embodiment of such a foil strip is shown in Figures 3E and 3F of the drawings and generally designated by the reference numeral 110.

The illustrated strip 110 is initially of an undefined or continuous length and has opposite side edges 112 and 114 to establish a strip width W which may be between 1 and 9 inches, depending on the size of the core body to be formed. The strip 110 is "skew corrugated", that is, the corrugations 116 extend on linear paths between the side edges 112 and 114, and are inclined at an oblique angle $\beta$ with respect to the side edges.

Ideally, the angle β is the same for all corrugations and is preferably in a range of from 4° to 15°. In practice, the oblique angle of individual corrugations may vary relative to others of the corrugations, although the angles P for all corrugations will fall within the preferred range.

In Figure 3F, the side profile of the foil strip 110 is shown at an enlarged scale to reveal an exemplary shape and relative dimensions of the corrugations 116. As shown, each corrugation 116 has a height h and pitch length 1. The thickness of the foil material from which the strip 10 is formed is designated by t.

In some applications, corrugations preferably have a height h of from about 0.01 inch to about 0.15 inch, and a pitch length 1 of from about 0.02 inch to about 0.25 inch. The height and pitch length of the corrugations determine cell density, that is, the number of cells per unit of cross-sectional area in the converter body, in accordance with equation (1):

$$(1) \qquad c = \cos \beta / h \, l$$

Typically, the cell density c is expressed in cells per square inch (cpsi) and, in some applications, may vary from about 50 cpsi to 1000 cpsi.

The foil strip 110 may be constructed from "ferritic" stainless steel such as that described in U.S. Patent 4,414,023 to Aggen. One usable ferritic stainless steel alloy contains 20% chromium, 5% aluminum, and from 0.002% to 0.05% of at least one rare earth metal selected from cerium, lanthanum, neodymium, yttrium, and praseodymium, or a mixture of two or more of such rare earth metals, balance iron and trace steel making impurities. A ferritic stainless steel is commercially available from Allegheny Ludlum Steel Co. under the trade designation "Alfa IV".

Another usable commercially available stainless steel metal alloy is identified as Haynes 214 alloy. This alloy and other useful nickeliferous alloys are described in U.S. Patent 4,671,931 to Herchenroeder et al. These alloys are characterized by high resistance to oxidation and high temperatures. A specific example contains 75% nickel, 16% chromium, 4.5% aluminum, 3% iron, optionally trace amounts of one or more rare earth metals except yttrium, 0.05% carbon, and steel making impurities. Still another suitable alloy is Haynes 230 alloy, which contains 22% chromium, 14% tungsten, 2% molybdenum, 0.10% carbon, a trace amount of lanthanum, balance nickel.

The ferritic stainless steels and the Haynes alloys 214 and 230, all of which are considered to be stainless steels, are examples of high temperature resistive, oxidation resistant (or corrosion resistant) metal alloys that are useful for use in making the foil strip and core body sheet elements of the present invention, as well as the multicellular honeycomb converter bodies thereof.

Suitable metal alloys must be able to withstand "high" temperature, e.g., from 900°C to 1200°C (1652°F to 2012°F) over prolonged periods.

Other high temperature resistive, oxidation resistant metal alloys are known and may be used as well. For most applications, and particularly automotive applications, these alloys are used as "thin" metal or foil, that is, having a thickness of from about 0.001 inch to about 0.005 inch, and, preferably, from 0.0015 inch to about 0.0037 inch.

In accordance with this aspect of the present invention, the skew corrugated foil strip is folded on lines perpendicular to the side edges thereof to provide a core body with a shaped periphery defined principally by parallel outside folds in the corrugated strip. In particular, the foil strip is reverse-folded in accordion fashion on fold lines spaced at intervals selected to generate the desired peripheral shape of the core body. The overlying adjacent segments of the strip between the folds provide fluid passages between the ends of the core body.

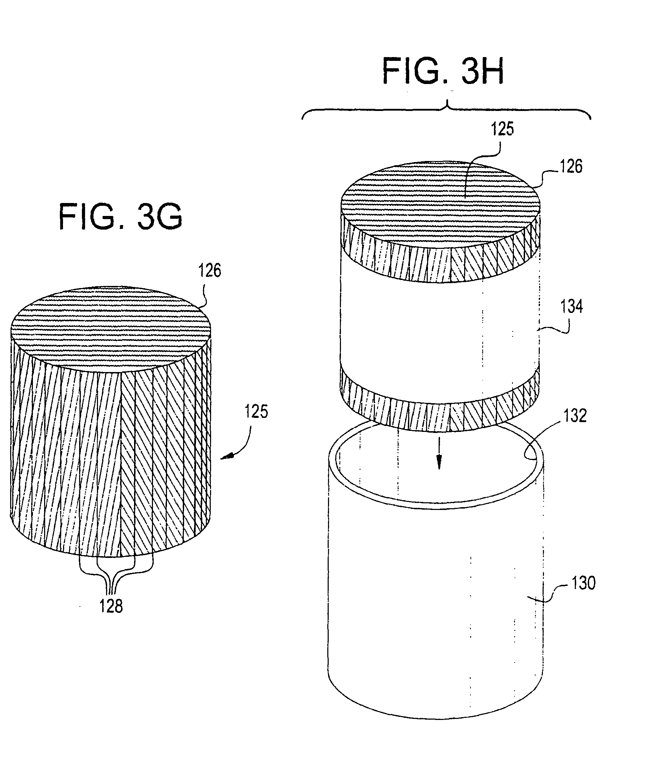

In Figure 3E, exemplary parallel fold lines are designated by the reference numerals 118, 119, 120, 121 and 122. These fold lines are also shown to be spaced at increasing intervals, from right to left in Figure 3E, to generate part of a core body 25 having a circular periphery, as shown in Figure 3G. Although the spacing of fold lines in Figure 3E is not precise and representative only, given the height h of corrugations in the strip 110, folding that strip to generate the circular periphery shown in Figure 3G is easily accomplished using known algorithms and computer controlled folding apparatus, for example. As a result of the folding operation, adjacent chord-like segments of the strip 110 extend between pairs of outside folds 128 located at the core periphery 126. Also, the corrugations 116 of adjacent strip segments cross each other in non-nesting relation to provide a network of fluid passages between the ends of the core body 125.

The crossings of corrugations establish contact points between adjacent strip segments, and serve to provide support for the individual foil segments or layers in a direction perpendicular to the chords on which they lie. The number of contact points between each strip segment or layer in the core body 125, therefore, represents a parameter contributing to strength and durability of the core body 125 in the completed honeycomb carrier body in which it is used. It is preferred that each corrugation in one strip segment or layer cross with corrugations in an adjacent layer at least 6 contact points, more preferably, 8 contact points. The number of contact points Np is dependent on the width W of the strip 110, the angle β of the skewed corrugations, and the pitch length 1 of the corrugations in equation (2):

$$(2) \qquad Np = 2W \sin\beta / l$$

After the core body is folded and assembled to the configuration shown in Figure 3G, for example, it is temporarily secured such as by tying a string or placing a rubber band or other ligature about the periphery thereof. The periphery 126 of the core body 125, particularly the outside folds 128, are cleaned to reveal a clean metallic surface at each of the outside folds 128. All coating materials applied to the strip 110 are removed by the cleaning from at least the outside folds 128. The cleaning may be accomplished, for example, by grit blasting the surfaces on the periphery of the core body 125, using aluminum oxide particles in a high velocity stream of compressed air. Silicon carbide grit also may be used. Other cleaning methods may be used to remove coating and other foreign materials from the periphery of the folded core body 125. For example, the periphery of the core body may be scraped or abraded with an assortment of well-known tools, such as files, abrasive stones, wire wheels and the like. Also, it is within the scope of the invention to provide a clean metal surface at the folds by masking the fold lines prior to coating.

After assembly and cleaning as described, the folded core body is inserted into a jacket tube so that folds at the core body periphery are in contact, preferably under compression, with the interior of the jacket tube, and the periphery of the core body is joined to the jacket tube.

In the illustrated embodiment and as depicted in Figure 3H, the core body 125 is inserted axially into a jacket tube 130 of cylindrical configuration to complement the exterior shape of the core body 125. The jacket tube 130 has an interior surface 132 and is formed preferably of stainless steel having a thickness of from about 0.03 inch to about 0.08 inch, preferably 0.04 inch to 0.06 inch. Prior to insertion, the interior surface 132 of the jacket tube 130 is coated with a brazing alloy such as AMDRY Alloy 770, 0.002 inch in thickness. Alternatively, and as illustrated in Figure 3H, the core body 125 may be wrapped in a brazing foil 134 as a way of providing a layer of brazing alloy between the outer periphery 126 of the core body 125 and the interior surface 132 of the jacket tube 130.

It is important that a sufficient number of the outside folds 128 at the periphery 126 of the core body 125 be in contact with the interior surface 132 of the jacket tube 130 to ensure a secure joining of the folds 128 to the interior surface 132 of the jacket. Such contact is preferably achieved by compressing the core body 125 to reduce its diameter approximately one to three percent. The reason for this compression and accompanied reduction in diameter of the core body 125 may be appreciated from the illustrations in Figures 3I and 3J of the drawings.

As shown in Figure 3I, adjacent layers or segments of the corrugated strip, designated 110a and 110b, are joined at the intended periphery 126 by fold lines 128a, 128b and 128c. Because of imperfections in the folding of the foil strip 110 with presently known folding equipment, it is not possible for the folds 128 to lie precisely on the intended periphery 126 of the core body 125. Thus, and as shown in Figure 3I, the fold 128a lies outside of the intended periphery 126, the fold 128b lies outside the intended periphery 126 and the fold 128c lies within the intended periphery 126. As shown in Figure 3J, after the core body 125 is inserted into the jacket 130 and is placed under compression against the inner surface 133 on which the brazing alloy 134 is located, the folds 128a and 128b are compressed to be strained or deformed inwardly so that all three folds firmly contact the brazing alloy 134. It should be understood that illustration in Figures 3I and 3J is for purposes of explanation only and that in practice, the respective folds 128 at the periphery of the core body, as folded, will deviate randomly from the intended periphery or that which complements the inner surface 132 of the jacket tube 130.

A preferred way of inserting the core body 125 into the jacket tube 130 is depicted in Figure 3K. As shown, the jacket tube 130 is mounted on a pedestal 136 and fitted at its upper end with an annular tapered die 138 having a frusto conical inner surface 139 which converges downwardly to an inside diameter equal to the inside diameter of the jacket tube 130. A ram 140 is used to force the core body 125 through the tapered inner surface 139 of the die 138 so that as the core body enters the jacket tube 125 it is compressed to reduce the diameter of the core body periphery 126 by the approximately one to three percent indicated above.

From the illustration in Figure 3K, it will be understood that the exterior periphery of the core body 125 is swaged upon insertion into the jacket tube 130 and thereafter retained in compressive contact with the interior surface 132 of the jacket tube. Alternatively, the core body 125 may be inserted into the jacket tube 130 without compression on insertion as depicted in Figure 3F. The periphery of the jacket tube 130 is then reduced by swaging the exterior of the jacket tube using a die 138a as shown in Figure 3L. After reducing the peripheral diameter of the jacket tube 130 in this manner, the core body is placed under compressive contact with the jacket tube 130.

A still further alternative to attainment of a compressive loading of the core body periphery 126 against the interior of the jacket tube 130 is to insert the core body 125 into the jacket tube while it is expanded and before it is closed by welding or brazing. This embodiment is illustrated in Figures 3M and 3N of the drawings. After insertion of the core body 125 with the jacket tube 130a opened as shown in Figure 3M, the open jacket tube is then compressed radially against the core body 125 to be closed along its length. The previously open slit is then joined by brazing or welding to secure the compressed core body 125.

The compressive loading of the core body periphery and the inner surface of the jacket tube against each other after the core body is inserted into the jacket tube, as described with reference to Figures 3L, 3M and 3N, offers a facility for mechanically joining the periphery 126 of the core body 125 to the interior of the jacket tube 130. For example, the inside surface 132 of the jacket tube 130 may be roughened by various forms and shapes of surface irregularities, such as peripheral striations, threads, barbs, relieved coating materials, and the like, so that when the jacket tube is compressed against the inserted core, a mechanical retention of the core body 125 within the jacket tube 130 is effected. Such a mechanical retention may be combined with a bond typified by brazing and, in some instances, may be used as a substitute for brazing. Thus, the term "join" is used herein to characterize the connection of the core body periphery to the jacket tube and is intended to encompass mechanical and bonding connections, as well as a combination of both.

To braze the folds 128 at the periphery of the core body to the inside surface 132 of the jacket tube 130 the compressed assembly of the core body and jacket tube preferably is put in a chamber. Air is evacuated and the chamber is backfilled with a non-oxidizing gas, preferably an inert gas such as argon. Also, a vacuum can be used without a gas backfill, as long as the remaining atmosphere is non-oxidizing. Also in the chamber is an induction coil which extends around the jacket tube with about eighth to a quarter inch clearance between the coil and the jacket tube. When the induction coil is energized, it heats the jacket tube and the outer folds of the foil by induction with a very localized heating effect, melting the brazing metal between the periphery of the core body and the jacket tube. The outside folds of the core body do not have the coating on them so they braze nicely to the interior surface of the jacket tube.

The aforementioned method provides a honeycomb carrier body having a metal jacket, a core body having a length between opposite ends and a periphery defined by folds in a corrugated strip, the interior surface of the jacket engaging the periphery of the core body to be in contact with all folds at the periphery, and a bond between the periphery of the core body and the interior surface of the jacket.

In an embodiment illustrated in Figures 3P and 3Q, a core body 125 of circular cross section is secured under compression within a jacket tube 130 and also by a bond 134, preferably of brazing material, between the outer periphery of the core body 125 and the interior of the jacket tube 130. As shown in Figure 3Q, the jacket tube is of a length slightly larger than that of the core body 125 so that the ends of the core body are recessed into the ends of the jacket tube 130.

Because of the facility offered by the method of forming the core by selected fold spacing intervals along a continuous corrugated strip, configurations other than the circular cylindrical configuration shown in Figures 3P and 3Q can be attained. Thus, in Figure 3R, a polygonal, more particularly, a hexagonal, end configuration of a core body 125 is illustrated. In Figure 3S, an elliptical end profile is shown in which the layers of corrugated foil extend across the minor axis of the ellipse. A variation of the elliptical end profile shown in Figure 3S is illustrated in Figure 3T. Thus, in Figure 3T, the end profile of the core body 125c is oblong or "racetrack" shaped. Finally, in Figure 3U, a core body 125 is illustrated as having a rectangular end profile. In each of the embodiments illustrated in Figures 3P-3U, the exterior configuration of the honeycomb carrier body is an erect parallelepiped, that is, the peripheral surfaces of the core body are generated by straight lines parallel with each other and also parallel with the central axis of the core body.

An anchor layer deposited on a substrate as taught herein can provide some rigidity to an excessively ductile or malleable metal substrate, it can provide a roughened surface on which a catalytic material may be deposited, and it can seal the surface of a metal substrate and thus protect the substrate against surface oxidation during use. As mentioned above, the ability to tenaciously adhere a catalytic material to a metal substrate as provided herein may also permit structural modification of a catalyst member as required to conform to the physical constraints imposed by canisters or other features of the exhaust gas treatment apparatus in which the catalyst member is mounted, without significant loss of catalytic material therefrom.

A suitable catalytic material for use on a carrier substrate prepared in accordance with this invention can be prepared by dispersing a compound and/or complex of any catalytically active component, e.g., one or more platinum group metal compounds or complexes, onto relatively inert bulk support material. As used herein, the term "compound", as in "platinum group metal compound" means any compound, complex, or the like of a catalytically active component (or "catalytic component") which, upon calcination or upon use of the catalyst, decomposes or otherwise converts to a catalytically active form, which is often, but not necessarily, an oxide. The compounds or complexes of one or more catalytic components may be dissolved or suspended in any liquid which will wet or impregnate the support material, which does not adversely react with other components of the catalytic material and which is capable of being removed from the catalyst by volatilization or decomposition upon heating and/or the application of a vacuum. Generally, both from the point of view of economics and environmental aspects, aqueous solutions of soluble compounds or complexes are preferred. For example, suitable water-soluble platinum group metal compounds are chloroplatinic acid, amine solubilized platinum hydroxide, rhodium chloride, rhodium nitrate, hexamine rhodium chloride, palladium nitrate or palladium chloride, etc. The compound-containing liquid is impregnated into the pores of the bulk support particles of the catalyst, and the impregnated material is dried and preferably calcined to remove the liquid and bind the platinum group metal into the support material. In some cases, the completion of removal of the liquid (which may be present as, e.g., water of crystallization) may not occur until the catalyst is placed into use and subjected to the high temperature exhaust gas. During the calcination step, or at least during the initial phase of use of the catalyst, such compounds are converted into a catalytically active form of the platinum group metal-or a compound thereof. An analogous approach can be taken to incorporate the other components into the catalytic material. Optionally, the inert support materials may be omitted and the catalytic material may consist essentially of the catalytic component deposited directly on the sprayed carrier substrate by conventional methods.

Suitable support materials for the catalytic component include alumina, silica, titania, silica-alumina, alumino-silicates, aluminum-zirconium oxide, aluminum-chromium oxide, etc. Such materials are preferably used in their high surface area forms. For example, gamma-alumina is preferred over alpha-alumina. It is known to stabilize high surface area support materials by impregnating the material with a stabilizer species. For example, gamma-alumina can be stabilized against thermal degradation by impregnating the material with a solution of a cerium compound and then calcining the impregnated material to remove the solvent and convert the cerium compound to a cerium oxide. The stabilizing species may be present in an amount of from about, e.g., 5 percent by weight of the support material. The catalytic materials are typically used in particulate form with particles in the micron-sized range, e.g., 10 to 20 microns in diameter, so that they can be formed into a slurry and coated onto a carrier member.

A typical catalytic material for use on a catalyst member for a small engine comprises platinum, palladium and rhodium dispersed on an alumina and further comprises oxides of neodymium, strontium, lanthanum, barium and zirconium. Some suitable catalysts are described in U.S. patent application 08/761,544 filed December 6, 1996, the disclosure of which is incorporated herein by reference. In one embodiment described therein, a catalytic material comprises a first refractory component and at least one first platinum group component, preferably a first palladium component and optionally, at least one first platinum group metal component other than palladium, an oxygen storage component which is preferably in intimate contact with the platinum group metal component in the first layer. An oxygen storage component ("OSC") effectively absorbs excess oxygen during periods of lean engine operation and releases oxygen during periods of fuel-rich engine operation and thus ameliorates the variations in the oxygen/hydrocarbon stoichiometry of the exhaust gas stream due to changes in engine operation between a fuel-rich operation mode and a lean (i.e., excess oxygen) operation mode. Bulk ceria is known for use as a OSC, but other rare earth oxides may be used as well. In addition, as indicated above, a co-formed rare earth oxide-zirconia may be employed as a OSC. The co-formed rare earth oxide-zirconia may be made by any suitable technique such as co-precipitation, co-gelling or the like. One suitable technique for making a co-formed ceria-zirconia material is illustrated in the article by Luccini, E., Mariani, S., and Sbaizero, O. (1989) "Preparation of Zirconia Cerium Carbonate in Water With Urea" Int. J. of Materials and Product Technology, vol. 4, no. 2, pp. 167-175, the disclosure of which is incorporated herein by reference. As disclosed starting at page 169 of the article, a dilute (0.1M) distilled water solution of zirconyl chloride and cerium nitrate in proportions to promote a final product of $ZrO_2$ - 10 mol % $CeO_2$ is prepared with ammonium nitrate as a buffer, to control pH. The solution was boiled with constant stirring for two hours and complete precipitation was attained with the pH not exceeding 6.5 at any stage.

Any suitable technique for preparing the co-formed rare earth oxide-zirconia may be employed, provided that the resultant product contains the rare earth oxide dispersed substantially throughout the entire zirconia matrix in the finished product, and not merely on the surface of the zirconia particles or only within a surface layer, thereby leaving a substantial core of the zirconia matrix without rare earth oxide dispersed therein. Thus, co-precipitated zirconium and cerium (or one other rare earth metal) salts may include chlorides, sulfates, nitrates, acetates, etc. The co-precipitates may, after washing, be spray dried or freeze dried to remove water and then calcined in air at about 500°C to form the co-formed rare earth oxide-zirconia support. The catalytic materials of aforesaid application Serial No. 08/761,544 may also include a first zirconium component, at least one first alkaline earth metal component, and at least one first rare earth metal component selected from the group consisting of lanthanum metal components and neodymium metal components. The catalytic material may also contain at least one alkaline earth metal component and at least one rare earth component and, optionally, at least one additional platinum group metal component preferably selected from the group consisting of platinum, rhodium, ruthenium, and iridium components with preferred additional first layer platinum group metal components being selected from the group consisting of platinum and rhodium and mixtures thereof.

A particular catalytic material described in 08/761,544 comprises from about 0.3 to about 3.0 parts (e.g., grams per unit volume) of at least one palladium component; from 0 to about 2.0 parts of at least one first platinum and/or first rhodium component; from about 100 to about 2,000 parts of a first support; from about 50 to about 1000 parts of the total of the first oxygen storage components in the first layer; from 0.0 and preferably about 0.1 to about 10 parts of at least one first alkaline earth metal component; from 0.0 and preferably from about 0.1 to about 300 parts of a first zirconium component; and from 0.0 and preferably about 0.1 to about 200 parts of at least one first rare earth metal component selected from the group consisting of ceria metal components, lanthanum metal components and neodymium metal component. Other suitable catalytic materials are described in U.S. Patent 5,597,771, the disclosure of which is incorporated herein by reference.

One specific catalytic material useful for the present invention may comprise 43.2 weight percent of gamma-alumina having a surface area of 150 square meters per gram (m$^2$/g) and a pore volume of 0.462 cubic centimeters per gram (cc/g); 41.5 weight percent of a second gamma-alumina of equal surface area but having a pore volume of 0.989 cc/g; 0.3 weight percent of neodymia, 0.6 weight percent of lanthana; 2.9 percent by weight of ceria, (ceria introduced in a soluble form in the slurry); 3.2 weight percent of barium oxide; 0.3 weight percent of strontium oxide; 2.9 weight percent of zirconia and 5.1 weight percent of recycled catalyst composition. The particle size of the refractory oxide may be about 12 micrometers. The use of the greater pore volume alumina is designed to help increase the top layer porosity and to help resist poisoning at the outer surface.

Another catalytic material, preferred for use with motorcycle engines, comprises a platinum group metal component comprising platinum and rhodium dispersed on a refractory oxide support component comprising alumina, co-formed ceria-zirconia, baria and zirconia, and may be prepared as follows.

First, rhodium is dispersed on an alumina support component by combining equal weights of a low surface area, small meso pore alumina having a surface area in the range of 148-168 m$^2$/g and a pore volume of about 0.6 g/cc and a high surface area, large pore alumina having a surface area in the range of 150 to 170 m$^2$/g and a pore volume of 1 cc/g $\pm$ 0.04 cc/g, to make a total of 1818.34 grams. The alumina support component is impregnated with a rhodium nitrate solution containing 11.8 grams rhodium nitrate.

Platinum is dispersed on a support component comprising alumina and co-formed ceria-zirconia by mixing equal weights of VGL alumina and the co-formed ceria-zirconia for a total of 3732.38 grams. The support component is impregnated with an aqueous platinum amine hydroxide solution containing 55.38 grams of the platinum amine hydroxide. A slurry of the catalytic material is prepared by combining 1829 grams of the rhodium-impregnated alumina (dry basis) and 3788 grams of the platinum-impregnated alumina and ceria-zirconia in 4700 grams of water with 1% acetic acid, a zirconium acetate solution containing 153 grams of zirconium acetate and 230 grams of barium acetate. These components are mixed and ground in a ball mill to achieve a particle size distribution such that 90% of the particles have a diameter of 8 microns or less. The slurry contains about 0.3% Octanol™ surfactant. The platinum and rhodium are thus provided in a ratio of Pt:Rh equals 5:1 and the platinum constitutes about 1.35% of the catalytic material by weight (dry basis). The co-formed ceria-zirconia is believed to function as an oxygen storage component.

A variety of deposition methods are known in the art for depositing catalytic material on a carrier substrate and most of these can be used with a carrier prepared according to the present invention. These include, for example, disposing the catalytic material in a liquid vehicle to form a slurry and wetting the carrier substrate with the slurry by dipping the carrier into the slurry (as mentioned above with reference to Figure 3D), spraying the slurry onto the carrier, etc. Alternatively, the catalytic material may be dissolved in a solvent and the solvent may then be wetted onto the surface of the carrier substrate and thereafter removed to leave the catalytic material, or a precursor thereof, on the carrier substrate. The removal procedure may entail heating the wetted carrier and/or subjecting the wetted carrier to a vacuum to remove the solvent via evaporation. Another method for depositing a catalytic material onto the carrier is to provide the catalytic material in powder form and adhere it to the substrate via electrostatic deposition. This method would be appropriate for producing a catalyst member for use in liquid phase chemical reactions. These methods of applying the catalytic component onto the carrier constitute a separate step in the manufacturing process relative to the application of the anchor layer, and their use therefore provides a distinction to the teaching of U.S. 5,204,302 (discussed above) in which the same plasma spray process for applying an undercoat is used to apply the catalyst. This process can be described as electric arc spraying on anchor layer on a substrate, discontinuing the spraying of that substrate and then depositing a catalytic material thereon. Other methods are known and may be used as well, including chemical vapor deposition.

One aspect of the present invention provides that a foamed metal substrate may comprise regions of varying substrate density and therefore provide, within a specified unit volume, different surface areas on which catalytic material can be deposited, i.e., different specific surface areas. Foamed metal substrates having uniform specific surface areas are referred to herein as "single density foamed substrates" whereas substrates having regions of differing specific surface areas are referred to herein as "multiple density foamed substrates". It is known in the art that the specific surface area of a single density foamed substrate can be determined by the appropriate choice of the organic precursors to the foamed metal. A foamed metal substrate may, however, be ductile and may be compressed after it is formed. Electric arc spraying in accordance with this invention makes feasible compressing the foam after it is coated with an anchor layer, and even after the catalytic component is applied thereto.

It has not previously been recognized in the prior art that a given procedure for depositing catalytic material on an open substrate having regions of differing specific surface area will deposit different effective loadings of catalytic materials in the regions of differing specific surface area. For example, a multiple density foamed substrate may be formed as an integral structure, e.g., by compressing only a portion of a single density foamed substrate, or it may be assembled by disposing two or more separate single density foamed metal structures having the same catalytic materials thereon but being of different specific surface areas and in close proximity to each other in the same apparatus, i.e., in an effectively contiguous relationship to each other, so that gas that is forced to flow through one substrate will enter the other. For example, a catalytic converter may comprise two (or more) catalyst members comprising single density foam of different densities placed in effectively contiguous relation to each other in the same canister. The contiguous placement of catalyst members having substrates of different specific surface area in accordance with the present invention can be practiced with substrates other than foamed metal substrates. For one example, this aspect of the present invention can be practiced using carrier substrates comprising corrugated foils and/or screens, and/or combinations thereof.

Catalyst members prepared in accordance with the present invention can be used in a wide variety of applications in which a fluid stream is flowed through the catalyst member to make contact with the catalytic material therein. An important use for such a catalyst member is as a flow-through catalyst member for the catalytic treatment of the components of a fluid stream, e.g., for the catalytic conversion of the noxious components of engine exhausts including, without limitation, exhausts from internal combustion engines, e.g., spark-ignited gasoline-type engines, such as motorcycle engines, utility engines and the like, and compression-ignited diesel-type engines, etc. Such exhausts may comprise one or more of unburned hydrocarbons, carbon monoxide (CO), oxides of nitrogen ($NO_X$), soluble oil fractions (SOF), soot, etc., which are to be converted by the catalytic material into innocuous substances. For example, the invention may be practiced in exhaust gas recirculation (EGR) lube catalysts for the removal of the SOF from diesel soot. Other applications include catalytic filters for car cabin air, reusable home heating air filters, catalytic flame arrestors and municipal catalytic water filtration units.

In most of the applications mentioned above, it is considered advantageous to provide a carrier of high surface area, i.e., to employ an open substrate, to enhance contact between the fluid stream and the catalyst member. For fluid phase reactions, a suitable carrier typically has a plurality of fluid-flow passages extending therethrough from one face of the carrier to another for fluid-flow therethrough. In one conventional carrier configuration that is commonly used for gas phase reactions and is known as a "honeycomb", the passages are typically essentially (but not necessarily) straight from an inlet face to an outlet face of the carrier and are defined by walls on which the catalytic material is coated so that the gases flowing through the passages contact the catalytic material. The flow passages of the carrier member may be thin-walled channels which can be of any suitable cross-sectional shape and size such as trapezoidal, rectangular, square, sinusoidal, hexagonal, oval, or circular. Such structures may contain from about 60 to about 700 or more gas inlet openings ("cells") per square inch of cross section ("cpsi"), more typically 200 to 400 cpsi. Such a honeycomb-type carrier may be constructed from metallic substrates in various ways such as, e.g., by placing a corrugated metal sheet on a flat metal sheet and winding the two sheets together about a mandrel. Alternatively, they may be made of any suitable refractory materials such as cordierite, cordierite-alpha-alumina, silicon nitride, zirconium mullite, spodumene, alumina-silica magnesia, zirconium silicate, sillimanite, magnesium silicates, zirconium oxide, petallite, alpha-alumina and alumino-silicates. Typically, such materials are extruded into a honeycomb configuration and then calcined, thus forming passages defined by smooth interior cell walls and a smooth outer surface or "skin."

The wire arc spraying technique of the present invention can be used to apply an anchor layer to the smooth interior surfaces of the gas-flow passages formed in a honeycomb-type ceramic carrier, as well as on the front face thereof, to provide a superior surface on which to deposit catalytic material and to increase the turbulence of the gas flowing through the catalyst member and thus increase the catalytic activity. In addition, the anchor layer may be deposited on the smooth exterior surface of the substrate to facilitate mounting the substrate in a canister, as described herein. Other flow-through-type carriers are known as well, e.g., porous foamed metal, wire mesh, etc., in which cases the gas-flow passages may be non-linear, irregular or reticulated. In many such embodiments, the inlet and outlet faces of the carrier are defined simply as the surfaces through which the fluid enters or leaves the carrier, respectively. A flow-through catalyst member is typically mounted in a body such as a canister to guide fluid flow through the carrier.

When deposited onto a honeycomb or other flow-through-type carrier, especially those based on an open substrate, the amounts of the various catalytic components of the catalytic material are often presented based on grams per volume basis, e.g., grams per cubic foot ($g/ft^3$) for platinum group metal components and grams per cubic inch ($g/in^3$) for catalyst member as a whole, as these measures accommodate different gas-flow passage configurations in different carriers. Catalyst members suitable for use in the treatment of engine exhaust gases may comprise a platinum group metal component loading of 25.5 $g/ft^3$ with a weight ratio of platinum-to-rhodium of 5:1, although these specifications may be varied considerably according to design and performance requirements. The finished catalyst member may be mounted in a metallic canister that defines a gas inlet and a gas outlet and that facilitates mounting the catalyst member in the exhaust pipe of the engine.

Catalyst members of this invention are well-suited for use in the treatment of the exhaust of small engines, especially two-stroke and four-stroke engines, because of the superior adherence of the catalytic material to the substrate, and to treat the exhaust of diesel engines. The exhaust gas treatment apparatus associated with a small engine is subjected to significantly different operating conditions from those experienced by the catalytic converters for automobiles or other large engine machines. This is because the devices with which smaller engines are powered are commensurately smaller than those powered by larger engines, e.g., a typical use for a small engine is to drive a lawn mower, whereas a larger engine will power, e.g., an automobile. Small engines are also employed in vehicles such as motorcycles, motor bikes, snow mobiles, jet skis, power boat engines, etc., and as utility engines for chain saws, blowers of snow, grass and leaves, string mowers, lawn edgers, garden tractors, generators, etc. Such smaller devices are less able to absorb and diffuse the vibrations caused by the engine, and they provide less design flexibility with regard to the placement of the catalytic converter. Because of the close proximity of the catalytic converter to a small engine, the catalyst member is subjected to intense vibrations. In addition, although the small mass of the engine allows for rapid cooling of the exhaust gases, small engines are characterized by high temperature variations as the load on the engine increases and decreases. Accordingly, a catalyst member used to treat the exhaust of a small engine is typically subjected to greater thermal variation and more vibration than the catalytic converter on an automobile, and these conditions have lead to spalling of catalytic material from prior art catalyst members. This problem is believed to be heightened in devices for the treatment of motorcycle exhaust because the combustion of fuel in each cycle of a motorcycle engine is believed to generate an explosion that sends a shock wave through the exhaust gas. The shock waves impose periodic stresses on the catalyst member in addition to the heat and vibrations common to other small engines, increasing the need for a strong bond of catalytic material to the substrate and therefore making a catalyst member as provided by this invention especially advantageous.

The incorporation of a catalyst member in accordance with the present invention into a device such as a lawn mower, motorcycle, generator, debris blower, etc., yields an improved device.

Due to their superior durability, catalyst members according to the present invention can also be used to treat the exhaust of a larger engine in ways unsuitable for many prior art catalyst members. For example, whereas a conventional catalyst member is disposed well downstream of an engine in a so-called underfloor position at which exhaust temperatures and engine vibrations are diminished, a catalyst member according to the present invention can be used advantageously in a close-coupled position relative to a vehicle engine. A close-coupled position is one that is much closer to the engine than the underfloor position and is typically in the engine compartment rather than under the sedan floor. A close-coupled position may be within inches from the exhaust manifold, or adjacent to it. The present invention permits close positioning of this kind relative to the engine where prior art catalyst members would not be placed due to concern that the intense heat and vibration from the engine could cause physical failure of the catalyst member, e.g., spalling of the catalytic material therefrom. The positioning of a catalyst member according to the present invention is, accordingly, more significantly dictated by the limits on the high temperature durability of the catalytic material rather than the physical integrity of the catalyst member. Spalling of catalytic material from prior art catalyst members is exacerbated with metallic carriers that may flex or bend under stress. Accordingly, the present invention is especially advantageous in these applications because of the superior adherence it provides between the catalytic material and the carrier as a result of the electric arc sprayed anchor layer on the metallic substrate.

As mentioned above, a variety of metal substrates can be wire arc-sprayed with metallic feedstock to deposit an anchor layer thereon. Accordingly, the anchor layer can be formed on various components the engine and/or of the associated exhaust gas treatment apparatus. For example, an anchor layer may be deposited on the interior of a metallic exhaust gas manifold to support a catalytic material therein. Alternatively, piston crowns may be wire arc spray-coated to provide an anchor layer for a catalytic material to be deposited thereon. Any other component of the engine and/or the associated exhaust treatment apparatus having a surface exposed to the exhaust of the engine can be treated to yield a catalyst member by applying an anchor layer thereon and depositing catalytic material on the anchor layer.

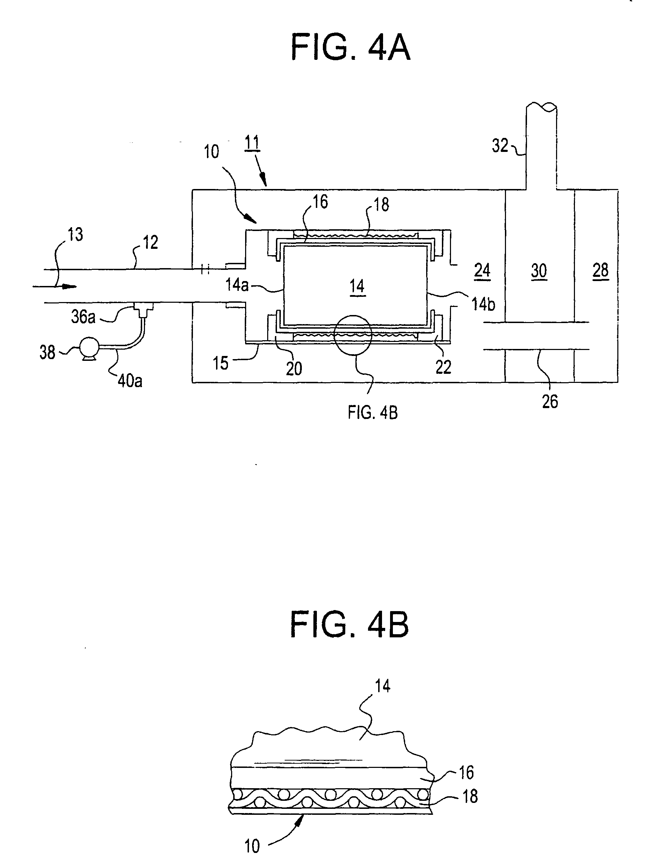

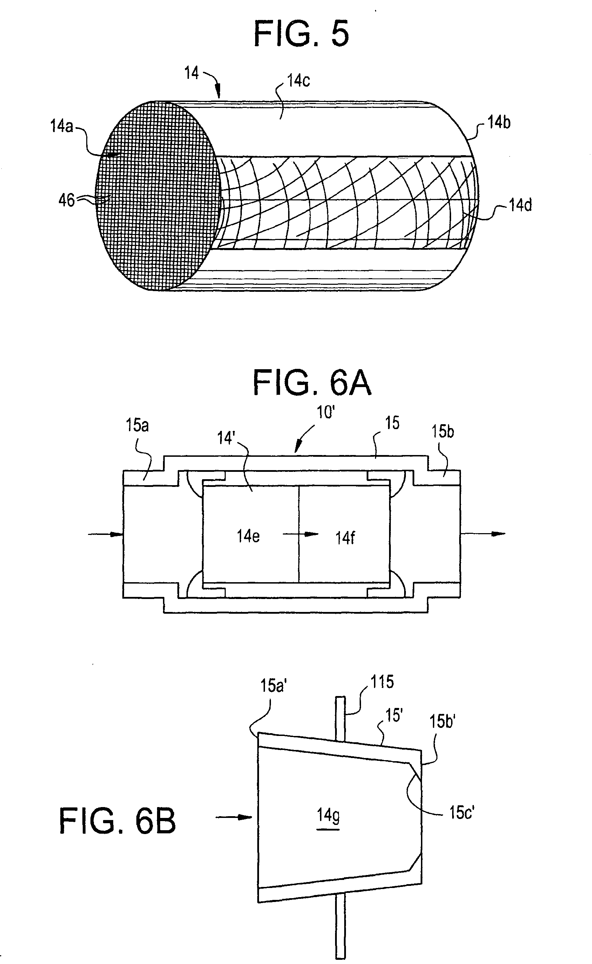

Still another aspect of the invention pertains to the use of thermal spraying to adhere one substrate to another. For example, the wire arc spray process can be directed to a ceramic body substrate on which a porous mesh or metal sheet substrate (preferably perforated) has been disposed, so that the anchor layer serves to bond the two substrates together. Thus, a metal sheet mounting substrate defining mounting tabs can be securely attached to a ceramic catalyst member to facilitate mounting the catalyst member in a metal canister as an alternative to using costly ceramic fiber fabric mounting mats. The use of a metallic mounting substrate surrounding the ceramic catalyst member is advantageous in that the metallic mounting member will have a coefficient of thermal expansion closer to that of the surrounding metallic canister than the ceramic monolith or a typical ceramic fiber fabric mounting mat. Intumescent ceramic fiber fabrics have been used in mounting mats for ceramic catalyst members in metal canisters to ameliorate the differences in thermal expansion of the canister and the catalyst member, but such fabrics are expensive and are subject to degradation under normal operating conditions. A metallic mounting substrate would be more durable, less expensive and better suited than a ceramic fiber fabric for securing the catalyst member to the canister because it can be formed to provide mounting tabs by which the catalyst member can be riveted, welded, soldered, etc., to the metallic canister. Even if it desired to continue the use of ceramic fiber fabric mounting mats, the rough surface of the anchor layer deposited by the electric arc spraying method of the present invention can be used advantageously to deposit a rough, adherent gripping region on the otherwise smooth exterior of the ceramic catalyst member so that the catalyst member will be more securely mounted within the surrounding ceramic fiber fabric. An exhaust gas treatment apparatus comprising a catalyst member in accordance with the present invention connected in the exhaust flow path is shown schematically in Figures 4A and 4B. Apparatus 10, which is situated in muffler 11, comprises a canister 15 mounted on the end of an exhaust pipe 12 which collects exhaust gas flowing, as indicated by arrow 13, from the exhaust outlet of a small engine (not shown). Canister 15 is a clamshell-type canister which contains a catalyst member 14 mounted therein. Surrounding catalyst member 14 within canister 15 is a layer of ceramic fiber fabric 16 which serves as a mounting mat, as is known in the art. Catalyst member 14 is shown in greater detail in Figure 5 where it is seen that catalyst member 14 comprises an extruded ceramic honeycomb-type substrate defining a plurality of longitudinally-extending gas-flow passages 46 that extend between an inlet face 14a and outlet face 14b. Catalyst member 14 has a smooth exterior skin 14c. Catalyst member 14 has been wire arc-sprayed in accordance with the present invention to provide an anchor region 14d on the outer skin 14c thereof. The anchor region 14d is strongly adhered to the ceramic monolith and provides a region of improved gripping contact with the ceramic fiber fabric 16. In addition, the ceramic monolith was sprayed from at least one of inlet face 14a and outlet face 14b to deposit an anchor layer inside the gas-flow passages, to increase the surface area within the gas-flow passages on which catalytic material may be deposited and to produce a carrier that has a strong adherent bond between the catalytic material and the carrier. In addition, since the inlet and outlet faces of the catalyst member are roughened by the anchor layer deposited thereon, as are the gas-flow passages, all of these surfaces tend to disrupt laminar gas flow through the catalyst member and thus increase the contact between the constituents of the exhaust stream and the catalytic material, thereby enhancing the effectiveness of the catalyst member. Surrounding ceramic fiber fabric 16 is an optional wire mesh 18. Fabric 16 and wire mesh 18 are wrapped around the sides of catalyst member 14 and are folded over ends 14a, 14b of catalyst member 14. Optional annular end rings 20 and 22 are welded to canister 15 to apply axial pressure on ends 14a and 14b of catalyst member 14 and help to secure catalyst member 14 within canister 15. In alternative embodiments, canister 15 can be configured to form end rings as an integral part of the canister. Apparatus 10 further comprises optional air inlets 36a through which optional air pump 38 may inject air or another oxygen-containing gas into the exhaust gas stream via air injection lines 40a. Muffler 11 vents to an exhaust pipe 32. In alternative embodiments, catalyst member 14 may comprise a metallic honeycomb substrate, a foamed metal substrate, a wire mesh substrate, or any other suitable flow-through substrate.

In operation, exhaust gases flow through exhaust pipe 12 into canister 15 of apparatus 10. The gases flow through catalyst member 14 and enter first chamber 24 of muffler 11. As gases flow through catalyst member 14, the catalytic material therein stimulates the conversion of some of the hydrocarbons and carbon monoxide in the exhaust gas to innocuous substances, e.g., carbon dioxide and water. The gases then flow through conduit 26 to second chamber 28 and then to third chamber 30. Gases are vented from muffler 11 to pipe 32. Thus, apparatus 10 defines a flow path from pipe 12 to pipe 32, through catalyst member 14.

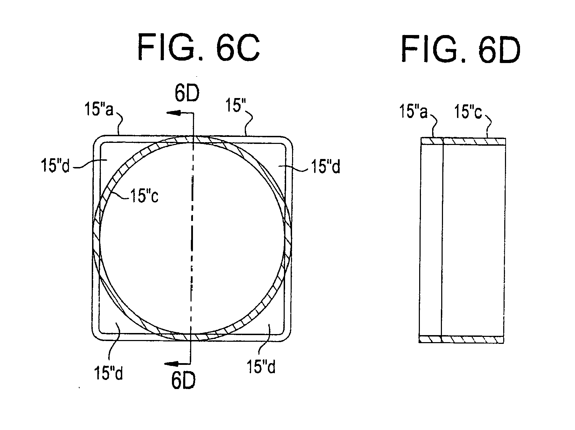

As stated above, catalyst member 14 may be formed from any one or more of the metallic substrates described above, e.g., corrugated, rolled sheet metal, metal foil, wire mesh, foamed metal, etc. In one particular embodiment illustrated in Figure 6, catalyst member 14' comprises a catalytic material deposited by the same procedure on foamed metal portions 14e and 14f having different densities. As a result, the loading of catalytic material in region 14e is different from that in region 14f. As indicated above, region 14e and region 14f may each comprise a single density foamed substrate, one having a density different from the other. As a result, the loading of catalytic components deposited thereon in similar processes are likely to be different. By placing the two regions in close proximity to each other in the canister, exhaust gas flows from one to the other. Alternatively, catalyst member 14' may comprise an originally single density foamed substrate that is compressed in one of regions 14e and 14f to create regions of different density. Canister 15 guides exhaust gas first into an inlet face of region 14e, then into region 14f and out the outlet face of region 14f and then out the outlet 15b of the canister, as indicated by the arrows. As stated above, this invention encompasses embodiments in which other structures carry an anchor layer with catalytic material thereon. For example, the interior of metal pipe 12 may be electric arc sprayed to deposit an anchor layer thereon and have catalytic material deposited thereon as one embodiment of this invention.

A preferred mode for practicing the present invention is illustrated in Figure 6B, in which a catalyst member 14g that comprises an electric-arc coated foamed metal substrate having a catalytic material deposited thereon is mounted in a metal mounting sleeve 15'. Sleeve 15' defines a tapered configuration, e.g., a conical frustum that is open at both ends and converges from the wide end 15a' to the narrow end 15b'. In a particular embodiment, the sleeve taper may conform to a conical angle of about 5 degrees. The foamed metal substrate may be formed in place in the sleeve in a conventional casting process in which one end of the sleeve is temporarily sealed to form a cup. The sleeve is then filled with a mixture of metal powder and granules of an expendable, removable material. The sleeve and the metal powder-removable granules mixture therein are sintered. The metal powder forms a porous matrix about the removable granules, which are burned away. The resulting foamed metal substrate is thus sintered to the sleeve. The substrate may then have the anchor layer and catalytic material deposited thereon. Alternatively, the foamed metal substrate may be formed apart from the sleeve and may then be machined for insertion into the sleeve before it is coated with catalytic material and, optionally but preferably, before it is thermally sprayed with the anchor layer. When the foamed metal substrate is positioned within the mounting sleeve, it may be sintered, soldered or otherwise secured in place. Preferably, the tapered catalyst member is mounted so that the exhaust gases enter from the large end and flow through to exit from the narrow end, as indicated by the direction of flow arrow (unnumbered) in Figure 6B. If the bond between the metal substrate and the sleeve becomes severed during use, flange 15c' will serve to inhibit catalyst member 14g from being blown out of sleeve 15' by exhaust gases flowing therethrough.

Sleeve 15' and catalyst member 14g therein can be mounted in a gas treatment apparatus in a conventional manner. Optionally, the conical sleeve 15' may be mounted in a mounting plate 115 to facilitate placement of the catalyst member in an exhaust gas conduit.

In an alternative embodiment, a foamed metal substrate can be formed in or mounted in a transition sleeve having an inlet portion that defines one geometric cross-sectional configuration and an outlet portion that defines a different geometric cross-sectional configuration with a distinct transition between them. At least part of the outlet portion has a radius or diameter that is smaller than the corresponding radius or diameter of the inlet portion so that a shoulder is defined within the sleeve between the two portions. The substrate is disposed in the inlet portion and is configured to bear against the shoulder, which prevents the substrate from leaving the inlet portion with the gas flowing therethrough should the bond between the substrate and the inlet portion fail. The inlet and outlet portions may be congruent in shape but different in size, e.g., both defining cylindrical portions with an annular shoulder between the larger inlet cylinder and the smaller outlet cylinder. Alternatively, as seen in Figures 6C and 6D, the inlet portion may have a different geometric configuration from the outlet portion. Figures 6C and 6D show a transition sleeve 15" comprising a square tubular inlet portion 15a" and a rounder tubular outlet portion 15c" whose internal diameter is the same as the internal side length of the inlet portion. Between the inlet and the outlet portions are four shoulders 15d" formed where the diagonal radius of the inlet portion 15a" exceeds the corresponding radius of the outlet portion 15c". A substrate having a generally square cross-sectional configuration can be configured to be received within square inlet portion 15a" and to bear against shoulders 15d". The transition sleeve is configured so that the inlet and outlet can be connected to correspondingly shaped ends of gas flow conduits in a gas treatment apparatus.

In other embodiments, a coated substrate in accordance with the present invention may find use as a support for a catalyst for the treatment of jet engine exhaust and/or as a support for a poison trap for use upstream from a jet engine exhaust catalyst, to abate the species in the engine exhaust gases that quickly degrade (i.e., "poison") the activity of catalyst.

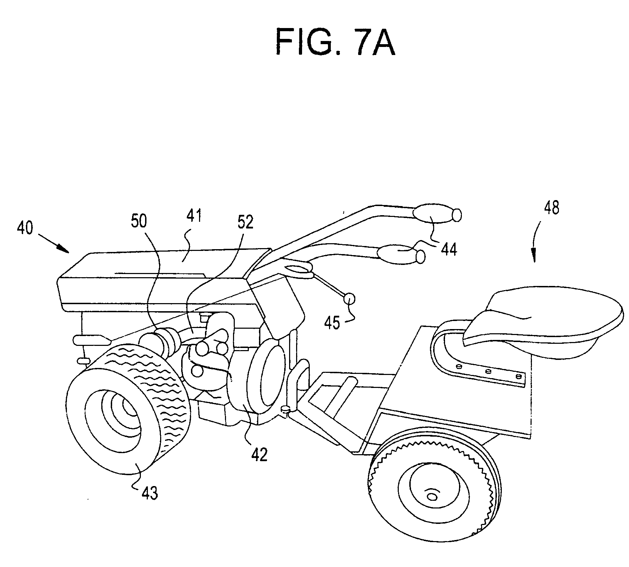

A two-wheel garden tractor 40 which includes a housing 41 containing a small engine and transmission assembly 42 for driving a pair of wheels 43 is seen in Figure 7A. Handlebars 44 extend rearwardly from the tractor for guiding the tractor, with suitable controls 45 being mounted at an accessible location on the handlebars for controlling the engine and/or transmission. A two-wheel trailer 48 is detachably and pivotally connected to the rear of the tractor 40 to provide a seat on which the operator can ride and control the tractor 40. As seen in the Figure, engine and transmission assembly 42 is equipped with a muffler 50 to which exhaust from the engine is flowed via a tubular catalyst member 52. A variety of tools can be connected to the tractor or to the trailer, as is known in that art

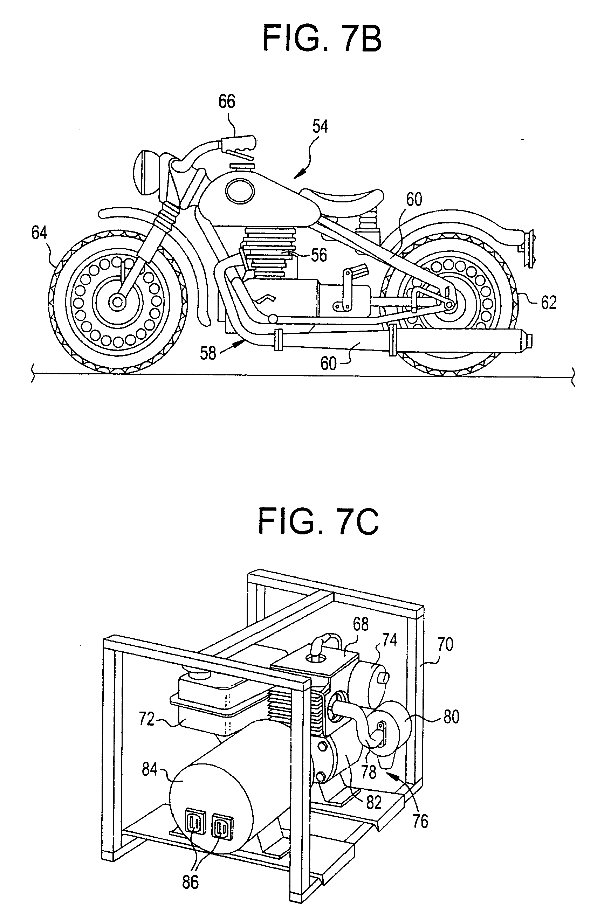

Figure 7B shows an improved motorcycle comprising a small engine 56 from which exhaust flows through exhaust system 58. Engine 56 is mounted on a frame 60 that is carried by a rear wheel 62 and a front wheel 64. The front wheel 64 is rotatably mounted on the frame 60 and connected to handle bars 66 that permit steering by a rider seated on the frame 60. One section of exhaust system 58 comprises a tubular catalyst member 60 in accordance with the present invention mounted in the flow path of the exhaust apparatus.

Figure 7C shows a small utility engine 68 mounted on a support frame 70. Engine 68 draws fuel from a fuel tank 72 and air from an air filter 74. The exhaust from engine 68 passes through an exhaust system 76 and comprises an exhaust pipe 78 mounted between the engine output and the muffler 80. Within exhaust pipe 78 is mounted one or more catalyst members, each comprising a flow-through substrate (e.g., a coiled wire mesh) that has an anchor layer electric arc sprayed thereon and a catalytic material deposited on the anchor layer in accordance with the present invention. In the illustrated embodiment, utility engine 68 is connected via a transmission unit 82 to an electric generator 84 that provides electric power through conventional outlets 86. However, it will be understood by one of ordinary skill in the art that utility engine 68 could similarly be adapted to drive other devices such as a pump, a compressor, a log splitter, etc., all of which would constitute improved devices in accordance with the present invention.

Small utility engines provide another environment and mode of use for coated substrates in accordance with the present invention, where they can be used as flame arrestors with or without catalytic material thereon. The use of flame arrestors for small engines *per se* is known in the art and has been described, e.g., in copending, commonly assigned U.S. Patent application 08/682,247 filed July 17, 1996, which is hereby incorporated herein by reference.

Example 1

Six steel wire mesh substrates and a 100 cpsi metal honeycomb were each wire arc-sprayed using nickel aluminide wire as the anchor layer feedstock. The nickel aluminide wire had a diameter of 1/16 inch (1.59 millimeters (mm)). The molten nickel aluminide alloy was sprayed at 11 lbs/hr with a gas pressure of 70 psi to deposit an anchor layer on the substrates at a stand-off of 6 inches. The spraying process on the 100 cpsi monolith successfully deposited an anchor coat in the interior gas-flow passages of the monolith.

One of the wire mesh substrates was subjected to temperature cycles in air at from about 100°C to 1000°C for 15 hours. After the temperature cycling, the mesh was examined and compared to a reference, and no difference between the surfaces of the two samples was noticed. A second wire mesh substrate was cycled for three hours from room temperature to about 930°C by heating in the flame of a Bunsen burner for about 6 seconds per cycle. Again, upon comparison to a reference, no difference in the surface of the anchor layers was seen. Catalytic material was applied to each of the samples and excellent adhesion was seen in all cases.

Example 2

Three different catalyst members were prepared in tubular configurations suitable for use in the exhaust treatment apparatus of a small engine to function as tubular catalyst members in accordance with the present invention, as follows. First, a steel metal screen was wire arc spray-coated with a nickel-aluminide alloy as described in Example 1 to deposit an anchor layer on the substrate. The screen substrate was then coated with a catalytic material comprising around 1 to 3 weight percent platinum and rhodium, in a 5:1 weight ratio, as the principal catalytic species, at a loading of 0.31 grams per square inch of substrate ($g/in^2$). The screen was then rolled into a tube having a diameter of about 1.75 inch and a length of about 7.25 inches, and it was tack-welded at three points along the seam to hold it together. This configuration had about 69 square inches of surface area on each side of the tube, for a total of 138 square inches.

Second, a metal herringbone foil was wire arc-sprayed with nickel aluminide alloy as described in Example 1 to provide an anchor layer thereon. The sprayed foil substrate was then coated with the same catalytic material as described above at a washcoat loading of 0.167 $g/in^2$. The foil was cut to measure 6 inches wide by 23 inches long, thus providing a surface area of about 138 square inches on each side. The foil was rolled into a tube having an outer diameter of 2 inches and a length of 6 inches.

The sprayed mesh substrates of Example 1 were each coated with the catalytic material referred to above. The substrates were open and porous so the surface area is difficult to quantify.

Each of the foregoing catalyst members was mounted in an exhaust tube measuring 7.75 inches in length and having an inner diameter of 2.375 inches to form a tubular catalyst member. Each tubular catalyst member was connected to the exhaust of a 50 cc, two-stroke engine with secondary air injected into the exhaust at a rate of 10 liters per minute. The effectiveness of the various tubular catalyst members was tested by sampling the exhaust gas twice at a point upstream of the catalyst member and twice at a point downstream of the tubular catalyst member with the engine running under a variety of operating conditions or modes. For each measurement, the engine was run for 3 minutes at the given operating mode. The data from the upstream and downstream samples were averaged and the averages were used to calculate conversion rates for the respective catalyst members in the tubular catalyst members. Measurements were made on an empty tube to provide a baseline comparison.

Each of the tubular catalyst members exhibited significant conversion rates for hydrocarbons at temperatures of about 450°C. The tubular catalyst members comprising the six wire mesh substrates of Example 1 had the best low temperature (200° to 325°C) activity.

While the invention has been described in detail with reference to particular embodiments thereof, it will be apparent that upon a reading and understanding of the foregoing, numerous alterations to the described embodiments will occur to those of ordinary skill in the art and it is intended to include such alterations within the scope of the appended claims.

**Claims**

1. A catalyst member comprising:

   a carrier substrate having an anchor layer disposed thereon by electric arc spraying; and catalytic material disposed on the carrier substrate.

2. The catalyst member of claim 1 wherein the anchor layer is deposited by electric arc spraying a metal feedstock selected from the group consisting of nickel, Ni/Al, Ni/Cr, Ni/Cr/Al/Y, Co/Cr, Co/Cr/Al/Y, Co/Ni/Cr/Al/Y, Fe/Al, Fe/Cr, Fe/Cr/Al, Fe/Cr/Al/Y, Fe/Ni/Al, Fe/Ni/Cr, 300 series stainless steels, 400 series stainless steels, and mixtures of two or more thereof.

3. The catalyst member of claim 2 wherein the anchor layer comprises nickel and aluminum.

4. The catalyst member of claim 3 wherein the aluminum comprises from about 3 to 10 percent of the combined weights of nickel and aluminum in the anchor layer.

5. The catalyst member of claim 3 wherein the aluminum comprises from about 4 to 6 percent aluminum of the combined weights of nickel and aluminum in the anchor layer.

6. The catalyst member of claim 1 wherein the catalytic material is deposited on the anchor layer and comprises a refractory metal oxide support on which one or more catalytic metal components are dispersed.

7. The catalyst member of claim 1 comprising a substrate selected from the group consisting of metal substrates and ceramic substrates.

8. An exhaust treatment apparatus comprising the catalyst member of claim 1, claim 3 or claim 4 connected in the exhaust flow path of an internal combustion engine.

9. The apparatus of claim 8 wherein the metal substrate comprises the interior surface of a conduit through which the exhaust of an internal combustion engine is flowed prior to discharge of the exhaust.

10. The apparatus of claim 8 wherein the carrier substrate comprises a metal substrate.

11. The apparatus of claim 8 wherein the carrier substrate comprises a ceramic substrate.

12. A catalyst member comprising:

a carrier comprising an open substrate and having an anchor layer disposed thereon by thermal spraying; and
catalytic material disposed on the carrier.

13. The catalyst member of claim 12 wherein the carrier comprises a substrate selected from the group consisting of foamed metal substrates and honeycomb monolith substrates.

14. The catalyst member of claim 13 wherein the substrate comprises a foamed metal substrate.

15. The catalyst member of claim 14 wherein the foamed metal substrate has from about 3 to 30 pores per lineal inch ("ppi").

16. The catalyst member of claim 14 wherein the foamed metal substrate has from about 3 to 10 ppi.

17. The catalyst member of claim 14 wherein the foamed metal substrate has from about 10 to 80 ppi.

18. The catalyst member of claim 14 wherein the foamed metal substrate has a density of about 6 percent of the density of the metal from which it was formed.

19. A catalyst member comprising:

a carrier substrate comprising at least two regions of different substrate densities disposed for fluid flow from one region to the other; and
a catalytic material deposited on the at least two substrate regions of different surface area densities.

20. The catalyst member of claim 19 wherein the at least two substrate regions of different substrate densities have thereon different effective loadings of the catalytic material.

21. The catalyst member of claim 19 or claim 20 wherein the at least two substrate regions comprise regions of substrates selected from the group consisting of foamed metal, wire mesh and corrugated foil honeycomb.

22. A method for manufacturing a catalyst member comprising:

depositing by electric arc spraying a metal feedstock onto a substrate to provide a metal anchor layer on the substrate, and
depositing a catalytic material onto the substrate.

23. The method of claim 22 comprising depositing the catalytic material by means other than electric arc spraying.

24. The method of claim 23 wherein depositing the catalytic material comprises coating the metal anchor layer with a catalytic material comprising a refractory metal oxide support on which one or more catalytic components are dispersed.

25. The method of claim 22 comprising electric arc spraying a molten metal feedstock at a temperature that permits the molten metal to freeze into an irregular surface configuration upon impinging on the substrate surface.

26. The method of claim 25 comprising spraying the molten metal with an arc temperature of not more than about 10,000°F.

**27.** A method for manufacturing a catalyst member comprising:

electric arc spraying a metal feedstock onto at least one substrate to provide at least one anchor layer-coated substrate;

depositing onto the at least one anchor layer-coated substrate a catalytic material comprised of a bulk refractory metal oxide having dispersed thereon one or more catalytically active components to provide at least one catalyzed substrate; and

incorporating the at least one catalyzed substrate into a body configured to define an inlet opening and an outlet opening and so configuring and disposing the at least one catalyzed substrate between the inlet and outlet openings to define a plurality of fluid flow paths therebetween.

**28.** The method of any one of claims 22-27 wherein the anchor layer is deposited by electric arc spraying a metal feedstock selected from the group consisting of nickel, Ni/Cr/Al/Y, Co/Cr/Al/Y, Fe/Cr/Al/Y, Co/Ni/Cr/Al/Y, Fe/Ni/Cr, Fe/Cr/Al, Ni/Cr, Ni/Al, 300 series stainless steels, 400 series stainless steels, Fe/Cr and Co/Cr, and mixtures of two or more thereof.

**29.** The method of claim 28 wherein the aluminum comprises from about 3 to 10 percent of the combined weights of nickel and aluminum in the anchor layer.

**30.** The method of claim 28 wherein the aluminum comprises from about 4 to 6 percent of the combined weights of nickel and aluminum in the anchor layer.

**31.** The method of any one of claims 22 through 27 wherein the substrate comprises a ferritic steel foam.

**32.** The method of claim 31 wherein the metal feedstock is selected from the group consisting of nickel, Ni/Cr/Al/Y, Co/Cr/Al/Y, Fe/Cr/Al/Y, Co/Ni/Cr/Al/Y, Fe/Ni/Cr, Fe/Cr/Al, Ni/Cr, Ni/Al, 300 series stainless steels, 400 series stainless steels, Fe/Cr and Co/Cr, and mixtures of two or more thereof.

**33.** The method of claim 32 wherein the aluminum comprises from about 3 to 10 percent of the combined weights of nickel and aluminum in the anchor layer.

**34.** An exhaust treatment apparatus comprising:

a catalyzed substrate comprising a metal substrate defining a plurality of fluid flow passages therethrough and having thereon an anchor layer electric arc sprayed thereon and a catalytic material disposed on the anchor layer, the catalytic material comprising a bulk refractory metal oxide having dispersed thereon one or more catalytically active metal components; and

a canister having an inlet opening and an outlet opening and within which the catalyzed metal substrate is enclosed, the catalyzed metal substrate being disposed between the inlet and outlet openings, whereby at least some of a fluid flowing through the canister between the inlet and outlet openings thereof is constrained to follow the fluid flow paths and thereby contact the catalyzed metal substrate.

**35.** The catalyst member of claim 34 wherein the catalyzed metal substrate is configured and positioned within the canister whereby substantially all of a fluid flowing through the canister between the inlet and outlet openings thereof is constrained to follow the fluid flow paths and thereby contact the catalyzed metal substrate.

**36.** A method for treating the exhaust stream from an engine, comprising flowing the exhaust stream into contact with the catalyst member of claim 1 or claim 19.

**37.** In a motorcycle comprising an engine and an exhaust treatment apparatus, the improvement comprising that the exhaust treatment apparatus comprises a catalyst member according to any one of claims 1-6, 19 or 20.

**38.** A utility engine comprising an exhaust apparatus comprising a catalyst member according to any one of claims 1-6, 18 or 19.

**39.** In a lawn mower comprising an engine and an exhaust treatment apparatus, the improvement comprising that the engine comprises the utility engine of claim 38.

**40.** A method for manufacturing a catalyst member to conform to a mounting container, comprising:

depositing an anchor layer onto a pliable substrate to provide an anchor layer coated substrate;

depositing a catalytic material onto the substrate; and

reshaping the substrate to conform to the container after depositing at least the anchor layer thereon.

**41.** The method of claim 40 wherein depositing the anchor layer comprises thermally spraying a metal feedstock onto the substrate.

**42.** The method of claim 40 wherein depositing the anchor layer comprises electric arc spraying a metal feedstock onto the substrate.

43. The method of claim 40, claim 41 or claim 42 comprising reshaping the substrate after depositing the catalytic material thereon.

44. The method of claim 40, claim 41 or claim 42 further comprising mounting the catalyst member in the container.

45. The method of claim 40 wherein depositing the anchor layer comprises plasma spraying a metal feedstock onto the substrate.

FIG.1B

FIG.1A

FIG.1C

FIG.1D

FIG.2A

FIG.2C

FIG.2B

FIG.2D

FIG.2E

FIG.2F

FIG.2G

EP 1 757 366 A2

FIG. 2H

FIG. 2I

# FIG.2J

# FIG. 3A

# FIG. 3B

# FIG. 3C

# FIG. 3D

EP 1 757 366 A2

# FIG. 3E

# FIG. 3F

FIG. 3H

125

126

134

132

130

FIG. 3G

126

125

128

# FIG. 3I

# FIG. 3J

# FIG. 3K

EP 1 757 366 A2

FIG. 3L

130

125

138a

FIG. 3M

125

130a

FIG. 3N

125

130a

34

FIG. 3P

125
130
134

FIG. 3R

125a

FIG. 3T

125c

FIG. 3Q

125

130

FIG. 3S

125b

FIG. 3U

125d

EP 1 757 366 A2

# FIG. 4A

# FIG. 4B

# FIG. 5

14 14c
14a
46 14b
14d

# FIG. 6A

15a 10' 15 15b
14'
14e → 14f

# FIG. 6B

15a' 115
15' 15b'
14g
15c'

# FIG. 6C

6D

15"a

15"

15"d

15"d

15"c

6D

15"d

15"d

# FIG. 6D

15"a

15"c

# FIG. 7A

# FIG. 7B

# FIG. 7C

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 07166398 A, Michael P. Galligan
- US 29321699 A, Michael P. Galligan
- US 071663 A
- US 5204302 A, I.V. Gorynin
- US 4027367 A, H.S. Rondeau
- US 3111396 A, Ball

- US 081728641 A
- US 4414023 A, Aggen
- US 4671931 A, Herchenroeder
- US 76154496 A
- US 5597771 A
- US 68224796 A

**Non-patent literature cited in the description**

- Catalysts Based On Foam Metals. *Journal of Advanced Materials,* 1994, vol. 1 (5), 471-476

- **LUCCINI, E. ; MARIANI, S. ; SBAIZERO, O.** Preparation of Zirconia Cerium Carbonate in Water With Urea. *Int. J. of Materials and Product Technology,* 1989, vol. 4 (2), 167-175